(19) Europäisches Patentamt
European Patent Office
Office européen des brevets

(11) EP 3 453 066 B1

(12) **EUROPEAN PATENT SPECIFICATION**

(45) Date of publication and mention of the grant of the patent:
**03.03.2021 Bulletin 2021/09**

(21) Application number: **17792325.7**

(22) Date of filing: **01.05.2017**

(51) Int Cl.:
***H01M 4/90*** (2006.01) ***H01M 4/92*** (2006.01)
***H01M 8/103*** (2016.01) ***C25B 1/06*** (2006.01)
***C25B 13/08*** (2006.01) ***C25B 1/10*** (2006.01)
***C25B 9/10*** (2006.01)

(86) International application number:
**PCT/CA2017/050529**

(87) International publication number:
**WO 2017/190234 (09.11.2017 Gazette 2017/45)**

(54) **ENERGY CONVERSION DEVICES INCLUDING STABLE IONENES**

ENERGIEUMWANDLUNGSVORRICHTUNGEN MIT STABILEN IONEN

DISPOSITIFS DE CONVERSION D'ÉNERGIE COMPRENANT DES IONÈNES STABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2016 US 201662330720 P**

(43) Date of publication of application:
**13.03.2019 Bulletin 2019/11**

(73) Proprietor: **Simon Fraser University**
**Burnaby, British Columbia V5A 1S6 (CA)**

(72) Inventors:
- **HOLDCROFT, Steven**
  **Pitt Meadows**
  **British Columbia V3Y 1W5 (CA)**
- **BRITTON, Benjamin**
  **Vancouver**
  **British Columbia V6T 2L3 (CA)**
- **WRIGHT, Andrew**
  **Mountain View,**
  **CA 94040 (US)**

(74) Representative: **J A Kemp LLP**
**14 South Square**
**Gray's Inn**
**London WC1R 5JJ (GB)**

(56) References cited:
**WO-A1-2014/012188** **WO-A1-2015/157848**
**WO-A1-2015/157848** **US-A1- 2006 110 632**

- **XING B ET AL: "Hydrogen/oxygen polymer electrolyte membrane fuel cells (PEMFCs) based on alkaline-doped polybenzimidazole (PBI)", ELECTROCHEMISTRY COMMUNICATIONS, ELSEVIER, AMSTERDAM, NL, vol. 2, no. 10, 1 October 2000 (2000-10-01), pages 697-702, XP002634276, ISSN: 1388-2481, DOI: 10.1016/S1388-2481(00)00107-7 [retrieved on 2000-09-18]**
- **WRIGHT, A. G. ET AL.: 'Hexamethyl-p-terphenyl poly(benzimidazolium): a Universal Hydroxide-Conducting Polymer for Energy Conversion Devices' ENERGY ENVIRON. SCI. vol. 9, no. 6, 25 May 2016, pages 2130 - 2142, XP055436321**
- **WRIGHT, A. G. ET AL.: 'Hydroxide-Stable Ionenes' ACS MACRO. LETT. vol. 3, no. 5, 2014, pages 444 - 447, XP055400919**
- **XING, B. ET AL.: 'Hydrogen/ Oxygen Polymer Electrolyte Membrane Fuel Cells (PEMFCs) Based on Alkaline-Doped Polybenzimidazole (PBI)' ELECTROCHEM. COMM. vol. 2, no. 10, 2000, pages 697 - 702, XP002634276**
- **HOU, H. ET AL.: 'Alkali Doped Polybenzimidazole Membrane for Alkaline Direct Methanol Fuel Cell' INT. J. HYDROGEN ENERGY vol. 33, no. 23, 2008, pages 7172 - 7176, XP025691214**
- **NOVITSKI, D. ET AL.: 'Electrochemical Reduction of Dissolved Oxygen in Alkaline, Solid Polymer Electrolyte Films' J. AM. CHEM. SOC. vol. 138, 02 November 2016, pages 15465 - 15472, XP055436338**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 453 066 B1

- **WEISSBACH, T. ET AL.: 'Simultaneous, Synergistic Control of Ion Exchange Capacity and Cross-Linking of Sterically-Protected Poly(benzimidazolium)s' CHEM. MATER. vol. 28, no. 21, 19 October 2016, pages 8060 - 8070, XP055436341**
- **WRIGHT, A. G. ET AL.: 'Poly(phenylene) and m-Terphenyl as Powerful Protecting Groups for the Preparation of Stable Organic Hydroxides' ANGEW. CHEM. INT. ED. vol. 55, no. 15, 2016, pages 4818 - 4821, XP055436344**
- **THOMAS, O. D. ET AL.: 'A Stable Hydroxide-Conducting Polymer' J. AM. CHEM. SOC. vol. 134, no. 26, 2012, pages 10753 - 10756, XP055436349**
- **THOMAS, O. D. ET AL.: 'Anion Conducting Poly(dialkyl benzimidazolium) Salts' POLY. CHEM. February 2011, pages 1641 - 1643, XP055436353**

**Description**

BACKGROUND

Polymer-based anion exchange membrane (AEM) fuel cells (AEMFCs) are of growing academic and technical interest as they have the potential to operate with non-platinum group electrocatalysts, thus significantly lowering manufacturing costs. AEMs also have great potential for use in water electrolyzers, water purification devices, redox-flow batteries, and biofuel cells. A goal of AEM research is to increase their stability under high pH and high temperature conditions. Several cationic moieties have been evaluated for their hydroxide stability, including guanidinium, 1,4-diazabicyclo[2.2.2]octan (DABCO), imidazolium, pyrrolidinium, sulfonium, phosphonium, and ruthenium-based cations. However, these generally degrade over relatively short periods of time when exposed to a combination of high pH and temperature. The majority of reported AEMs are derived from commercial and traditional polymer backbones (polystyrene and polyethersulfones/ketones) due to the low cost, ease of preparation, and availability, but these may also contain backbone functionality that are susceptible to degradation that exacerbates instability.

One class of polymers that contains cationic moieties along the backbone, as opposed to the previously mentioned pendant examples, are the alkylated poly(benzimidazoles), wherein the integrity of the polymer backbone is directly related the stability of the benzimidazolium group. Without wishing to be bound by theory, it is believed that the number of possible degradation routes for poly(benzimidazolium) are few. It was originally reported that degradation of methylated poly(benzimidazolium) was the result of ring opening, initiated by hydroxide attack on the $C_2$-position. Chemical degradation of membranes is accompanied by increased brittleness and deterioration of the membrane. The probability of hydroxide attack may be lowered by increasing the electron density at the $C_2$-position using electron-donating groups and/or by increasing the distance between the benzimidazolium repeat units. A strategy leading to stabilization of the benzimidazolium is to introduce steric hindrance around the $C_2$-position by way of proximal methyl groups. A polymeric material that has been demonstrated to exhibit exceptional chemical stability is based on poly[2,2'-(2,2",4,4",6,6"-hexamethyl-*p*-tererphenyl-3,3"-diyl)-5,5'-bibenzimidazole] (HMT-PBI).

The long-term *in situ* stability of a cationic polymer that can act as both an anion-exchange membrane and ionomer would represent a significant advance in AEMFC and water electrolysis research. Such a material could serve as a benchmark material, allowing the effect of radical species on AEMs to be probed, for example, so as to form the basis for the development of accelerated durability tests. Furthermore, a chemically-stable, high-conductivity anion-exchange ionomer that is resistant to $CO_2$ impurities is required to assess the function and stability of novel alkaline catalysts. While AEMFC stability has been shown to some extent at 50°C, higher temperatures are required to increase hydroxide conductivity and improve $CO_2$ tolerance. Additionally, a benchmark AEM material would require its synthesis to be scalable as well as possess a wide-range of properties, such as good mechanical properties, high anionic conductivity, low water uptake, low dimensional swelling, and high chemical stability.

Thus, membranes including a cationic polymer that can act in both an anion-exchange membrane and ionomer are needed. The cationic polymer should present a chemically-stable, high-conductivity anion-exchange ionomer that is resistant to $CO_2$ impurities; should possess good mechanical properties, high anionic conductivity, low water uptake, low dimensional swelling, and high chemical stability; and should be amenable to large scale synthesis. The present disclosure seeks to fulfill these needs and provides further advantages.

WO2015157848 discloses hydroxide ion-exchange polymers suitable for use as ionomers in catalyst layers for fuel cells and electrolyzers. The polymers include ionenes and are alcohol-soluble and water-insoluble.

Xing et al. "Hydrogen/oxygen polymer electrolyte membrane fuel cells (PEMFCs) based on alkaline-doped polybenzimidazole (PBI)", Electrochemistry Communications, Elsevier, vol. 2, no. 10, 1 October 2000, pages 697-702 discloses hydrogen/oxygen PEMFC fuel cells based on KOH-doped PBI.

WO2014012188 discloses a porous electrolytic composite membrane for electrochemical energy systems, such as alkaline fuel cells, metal-air batteries and alkaline electrolyzers, which comprises a porous polymeric material and nanomaterials.

US2006110632 discloses a method for preparing a metal catalyst, comprising mixing a conductive catalyst material, a proton conductive material, and a first solvent, casting the mixture onto a supporting layer and drying the mixture to form a conductive catalyst containing film, separating the conductive catalyst containing film from the supporting layer and pulverizing the conductive catalyst containing film to obtain the metal catalyst.

SUMMARY

This summary is provided to introduce a selection of concepts in a simplified form that are further described below in the Detailed Description.

In one aspect, the present disclosure features a catalyst-coated membrane, including:

(a) a film comprising a random copolymer of Formula (I)

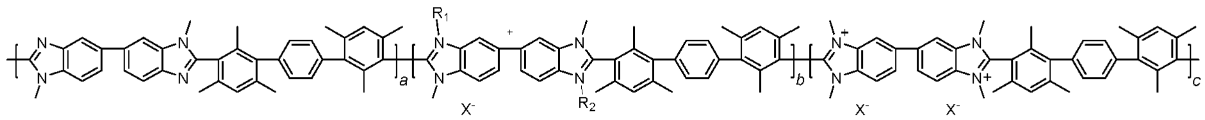

(I)

wherein

$X^-$ is an anion selected from iodide, bromide, chloride, fluoride, hydroxide, carbonate, bicarbonate, sulfate, tetrakis(3,5-bis(trifluoromethyl)phenyl)borate, bis(trifluoromethane)sulfonamide, and any combination thereof, wherein $X^-$ counterbalances a positive charge in the polymer;
$R_1$ and $R_2$ are each independently selected from absent and methyl,
provided that $R_1$ and $R_2$ are not both absent, or both methyl;
provided that when one of $R_1$ or $R_2$ is methyl, the other is absent; and
provided that when $R_1$ or $R_2$ is methyl, the nitrogen to which the methyl is connected to is positively charged,
a, b, and c are mole percentages, wherein
a is from 0 mole % to 45 mole %,
b+c is 55 mole % to 100 mole %,
b and c are each more than 0 %, and
a+b+c=100%, and

(b) a catalyst coating on the film, the catalyst coating including from 5 % to 35 % by weight of the copolymer of Formula (I) and from 10 % to 95 % by weight of a metal or non-metal catalyst, specifically a catalyst selected from carbon-supported Pt, alkaline-stable metal-supported Pt, non-supported Pt, carbon-supported Pt alloy, alkaline-stable metal-supported Pt alloy, non-supported Pt alloy, and any combination thereof; Ag, Ni, alloys thereof, and any combination thereof; a doped graphene; and a doped carbon nanotube.

In another aspect, the present disclosure features a fuel cell, including a catalyst-coated membrane above, wherein the catalyst-coated membrane has two sides, one side of the catalyst-coated membrane is a cathode, and the other side of the catalyst-coated membrane is an anode.

In yet another aspect, the present disclosure features a method of operating a fuel cell including a catalyst-coated membrane above, the method including (a) conditioning the fuel cell by supplying hydrogen to the anode, and oxygen and water to the cathode, and operating the fuel cell to generate electrical power and water at a potential of 1.1 V to 0.1 V and at a temperature of 20 °C to 90 °C, until the fuel cell reaches at least 90 % of peak performance; and (b) continuing supplying hydrogen to the anode and oxygen and water to the cathode, and operating the fuel cell at a potential of 1.1 V to 0.1 V and a temperature of 20 °C to 90 °C. It is understood that unless otherwise stated, operation of a device (e.g., a fuel cell, a water electrolyzer, etc.) including the catalyst-coated membrane is at 1 atm.

In yet another aspect, the present disclosure features a method of making a fuel cell, including (a) pre-conditioning a catalyst-coated membrane above by contacting the catalyst-coated membrane with an aqueous hydroxide solution for at least 1 hour to provide a pre-conditioned catalyst-coated membrane; and (b) incorporating the pre-conditioned catalyst-coated membrane into a fuel cell.

In yet another aspect, the present disclosure features a method of making a fuel cell, including (a) incorporating a catalyst-coated membrane above into a fuel cell; and (b) pre-conditioning the fuel cell by contacting the catalyst-coated membrane with an aqueous hydroxide solution for at least 1 hour to provide a pre-conditioned catalyst-coated membrane.

In yet another aspect, the present disclosure features a water electrolyzer, including a catalyst-coated membrane above, wherein the catalyst-coated membrane has two sides: one side of the catalyst-coated membrane is a cathode, and the other side of the catalyst-coated membrane is an anode.

In yet another aspect, the present disclosure features a method of operating a water electrolyzer above, including (a) providing water or an aqueous hydroxide electrolyte solution at 20 °C to 80 °C to the anode, the cathode, or both the anode and the cathode of the water electrolyzer; and (b) operating the water electrolyzer to generate hydrogen, oxygen, and water.

In yet another aspect, the present disclosure features a method of making an electrolyzer (e.g., a water electrolyzer), including (a) incorporating a catalyst-coated membrane above into the electrolyzer; and (b) pre-conditioning the electrolyzer by contacting the catalyst-coated membrane with an aqueous hydroxide solution for at least 1 hour to

provide a pre-conditioned catalyst-coated membrane.

In yet a further aspect, the present disclosure features a method of making an electrolyzer (e.g., a water electrolyzer), including (a) pre-conditioning a catalyst-coated membrane above by contacting the catalyst-coated membrane with an aqueous hydroxide solution for at least 1 hour to provide a pre-conditioned catalyst-coated membrane; and (b) incorporating the pre-conditioned catalyst-coated membrane into an electrolyzer.

DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIGURE 1 is a chemical structure of 50-100% degree of methylation (dm) of an embodiment of a random ("ran") polymer of the present disclosure in its iodide form, where constitutional units are between square brackets and are randomly distributed in the polymer chain, and mole percentages are indicated by a, b, an c (i.e., HMT-PMBI (I-), where dm represents the degree of methylation).

FIGURE 2 is a schematic representation of an embodiment of an anion exchange membrane fuel cell (AEMFC) of the present disclosure.

FIGURE 3 is a schematic representation of an embodiment of a water electrolyzer of the present disclosure.

FIGURE 4 is a graph showing mechanical properties of a membrane including an embodiment of a polymer of the present disclosure, at 89% dm in either the as-cast form ($I^-$, dry) or chloride-exchanged wet and dry forms.

FIGURE 5A is a graph showing measured electrochemical impedance spectroscopy (EIS) of an embodiment of a polymer of the present disclosure, at 89% dm (initially in $OH^-$ form), at 95% RH and 30 °C in air over time.

FIGURE 5B is a graph of ionic conductivity as measured by electrochemical impedance spectroscopy of an embodiment of a polymer of the present disclosure, at 89% dm (initially in $OH^-$ form) at 95% RH and 30 °C in air over time, where the inset shows the expanded, 0-60 min, region.

FIGURE 6A is an Arrhenius plot of ion conductivity of an embodiment of a polymer of the present disclosure, at 89% dm in mixed carbonate form at various temperatures and relative humidities (RH), in air.

FIGURE 6B is a plot of the calculated activation energy of an embodiment of a polymer of the present disclosure, at 89% dm in mixed carbonate form at various relative humidities.

FIGURE 7A is a graph showing volume dimensional swelling ($S_v$) versus water uptake ($W_u$), including a dashed trendline which excludes $K_2CO_3$, $Na_2SO_4$, and KF, for an embodiment of a polymer of the present disclosure, at 89% dm.

FIGURE 7B is a graph showing directional dimensional swelling ($S_x$, $S_y$, or $S_z$) for an embodiment of a polymer of the present disclosure, at 89% dm, after being soaked in various 1 M ionic solutions and washed with water. $S_x$ and $S_y$ represent in-plane swelling in x and y directions, respectively. $S_z$ represents an out-of-plane swelling.

FIGURE 8A is a graph showing the measured chloride ion conductivity of a of a membrane including an embodiment of a polymer of the present disclosure, at 89% dm, after 7 days of soaking in 2 M KOH at various temperatures. Membranes were first reconverted to the chloride form for conductivity measurements and then the remaining benzimidazolium was determined from their $^1H$ NMR spectra. The open diamonds refer to the initial samples.

FIGURE 8B is a graph showing relative percent of benzimidazolium remaining in a membrane including an embodiment of a polymer of the present disclosure, at 89% dm, after 7 days of soaking in 2 M KOH at various temperatures. Membranes were first reconverted to the chloride form for conductivity measurements and then the benzimidazolium remaining was determined from their $^1H$ NMR spectra. The open diamonds refer to the initial samples.

FIGURE 8C is a graph showing the measured chloride ion conductivity of a membrane including an embodiment of a polymer of the present disclosure, at 89% dm, after 7 days immersion in NaOH solutions of increasing concentration at 80 °C. Membranes were first reconverted to the chloride form for conductivity measurements and then the benzimidazolium remaining was determined from their $^1H$ NMR spectra. The open diamonds refer to the initial samples.

FIGURE 8D is a graph showing the relative percent of benzimidazolium remaining in a membrane including an embodiment of a polymer of the present disclosure, at 89% dm, after 7 days of immersion in NaOH solutions of increasing concentration at 80 °C. Membranes were first reconverted to the chloride form for conductivity measurements and then the benzimidazolium remaining was determined from their $^1H$ NMR spectra. The open diamonds refer to the initial samples.

FIGURE 9 is a graph showing measured applied potentials over time for an AEMFC incorporating an embodiment of a membrane and ionomer of the present disclosure, operated at 60 °C, with $H_2$ being supplied to the anode, at the current density shown. At 60 h, the AEMFC was shut-down, left idle for 5 days at room temperature, and restarted back to 60°C. Between 70-91 h, the cathode was run using air ($CO_2$-containing); otherwise, it was operated with $O_2$.

FIGURE 10A is a graph showing AEMFC polarization and power density curves after various operational times for a device including an embodiment of a polymer of the present disclosure, operated at 60°C and with $H_2/O_2$ supplied to anode/cathode unless otherwise noted, specifically, FIGURE 10 A shows the performance before, during, and after switching the cathode supply from $O_2$ (51 hours ("h")) to air (75 h) and then back to $O_2$ (94 h),

FIGURE 10B is a graph showing AEMFC polarization and power density curves after various operational times for a device including an embodiment of a polymer of the present disclosure, operated at 60°C and with $H_2/O_2$ supplied to anode/cathode unless otherwise noted, specifically, FIGURE 10B shows the power density at 0, 51, and 94 h,

FIGURE 10C is a graph showing AEMFC polarization and power density curves after various operational times for a device including an embodiment of a polymer of the present disclosure, operated at 60°C and with $H_2/O_2$ supplied to anode/cathode unless otherwise noted, specifically, FIGURE 10C shows the variable temperature performance after an initial 109 h of operation at 60 °C.

FIGURE 11 is a graph showing AEMFC performance of devices including an embodiment of a polymer of the present disclosure, or of a comparative polymer (FAA-3), operated under zero backpressure at 60 °C and with $H_2/O_2$ at 100% RH

FIGURE 12 is a graph showing measured potential over time for a water electrolysis test of devices including a comparative polymer (FAA-3, at 20 mA $cm^{-2}$) or an embodiment a of a polymer of the present disclosure (25 mA $cm^{-2}$), where the flowing electrolyte was 1 M KOH at 60°C for up to 195 h, at which point the still-functional electrolyzer was shut down. At 144 h, the current was stopped, the cell was allowed to re-condition with the same electrolyte and temperature, and then restarted.

DETAILED DESCRIPTION

Described herein are stable hydroxide ion-exchange polymers and devices including the stable hydroxide ion-exchagne polymers. The polymers include ionenes, which are polymers that contain ionic amines in the backbone. The polymers are alcohol-soluble and water-insoluble. The polymers have a water uptake and an ionic conductivity that are correlated to a degree of N-substitution. Methods of forming the polymers and membranes including the polymers are also provided. The polymers are suitable, for example, for use as ionomers in catalyst layers for fuel cells and electrolyzers.

Definitions

At various places in the present specification, substituents of compounds of the disclosure are disclosed in groups or in ranges. It is specifically intended that the disclosure include each and every individual subcombination of the members of such groups and ranges. For example, the term "$C_{1-6}$ alkyl" is specifically intended to individually disclose methyl, ethyl, $C_3$ alkyl, $C_4$ alkyl, $C_5$ alkyl, and $C_6$ alkyl.

It is further intended that the compounds of the disclosure are stable. As used herein "stable" refers to a compound that is sufficiently robust to survive isolation to a useful degree of purity from a reaction mixture.

It is further appreciated that certain features of the disclosure, which are, for clarity, described in the context of separate embodiments, can also be provided in combination in a single embodiment. Conversely, various features of the disclosure which are, for brevity, described in the context of a single embodiment, can also be provided separately or in any suitable subcombination.

"Optionally substituted" groups can refer to, for example, functional groups that may be substituted or unsubstituted by additional functional groups. For example, when a group is unsubstituted, it can be referred to as the group name, for example alkyl or aryl. When a group is substituted with additional functional groups, it may more generically be referred to as substituted alkyl or substituted aryl.

As used herein, the term "substituted" or "substitution" refers to the replacing of a hydrogen atom with a substituent other than H. For example, an "N-substituted piperidin-4-yl" refers to replacement of the H atom from the NH of the piperidinyl with a non-hydrogen substituent such as, for example, alkyl.

As used herein, the term "alkyl" refers to a straight or branched hydrocarbon groups having the indicated number of carbon atoms. Representative alkyl groups include methyl ($-CH_3$), ethyl, propyl (e.g., n-propyl, isopropyl), butyl (e.g., n-butyl, sec-butyl, and tert-butyl), pentyl (e.g., n-pentyl, tert-pentyl, neopentyl, isopentyl, pentan-2-yl, pentan-3-yl), and hexyl (e.g., n-pentyl and isomers) groups.

As used herein, the term "alkylene" refers to a linking alkyl group.

As used herein, the term "perfluoroalkyl" refers to straight or branched fluorocarbon chains. Representative alkyl groups include trifluoromethyl, pentafluoroethyl, etc.

As used herein, the term "perfluoroalkylene" refers to a linking perfluoroalkyl group.

As used herein, the term "heteroalkyl" refers to a straight or branched chain alkyl groups having the indicated number of carbon atoms and where one or more of the carbon atoms is replaced with a heteroatom selected from O, N, or S.

As used herein, the term "heteroalkylene" refers to a linking heteroalkyl group.

As used herein, the term "alkoxy" refers to an alkyl or cycloalkyl group as described herein bonded to an oxygen atom. Representative alkoxy groups include methoxy, ethoxy, propoxy, and isopropoxy groups.

As used herein, the term "perfluoroalkoxy" refers to a perfluoroalkyl or cyclic perfluoroalkyl group as described herein bonded to an oxygen atom. Representative perfluoroalkoxy groups include trifluoromethoxy, pentafluoroethoxy, etc.

As used herein, the term "aryl" refers to an aromatic hydrocarbon group having 6 to 10 carbon atoms. Representative aryl groups include phenyl groups. In some embodiments, the term "aryl" includes monocyclic or polycyclic (e.g., having 2, 3, or 4 fused rings) aromatic hydrocarbons such as, for example, phenyl, naphthyl, anthracenyl, phenanthrenyl, indanyl, and indenyl.

As used herein, the term "arylene" refers to a linking aryl group.

As used herein, the term "aralkyl" refers to an alkyl or cycloalkyl group as defined herein with an aryl group as defined herein substituted for one of the alkyl hydrogen atoms. A representative aralkyl group is a benzyl group.

As used herein, the term "aralkylene" refers to a linking aralkyl group.

As used herein, the term "heteroaryl" refers to a 5- to 10-membered aromatic monocyclic or bicyclic ring containing 1-4 heteroatoms selected from O, S, and N. Representative 5- or 6-membered aromatic monocyclic ring groups include pyridine, pyrimidine, pyridazine, furan, thiophene, thiazole, oxazole, and isooxazole. Representative 9- or 10-membered aromatic bicyclic ring groups include benzofuran, benzothiophene, indole, pyranopyrrole, benzopyran, quionoline, benzocyclohexyl, and naphthyridine.

As used herein, the term "heteroarylene" refers to a linking heteroaryl group.

As used herein, the term "halogen" or "halo" refers to fluoro, chloro, bromo, and iodo groups.

As used herein, the term "bulky group" refers to a group providing steric bulk by having a size at least as large as a methyl group.

As used herein, the term "copolymer" refers to a polymer that is the result of polymerization of two or more different monomers. The number and the nature of each constitutional unit can be separately controlled in a copolymer. The constitutional units can be disposed in a purely random, an alternating random, a regular alternating, a regular block, or a random block configuration unless expressly stated to be otherwise. A purely random configuration can, for example, be: x-x-y-z-x-y-y-z-y-z-z-z... or y-z-x-y-z-y-z-x-x.... An alternating random configuration can be: x-y-x-z-y-x-y-z-y-x-z..., and a regular alternating configuration can be: x-y-z-x-y-z-x-y-z.... A regular block configuration (i.e., a block copolymer) has the following general configuration: ..x-x-x-y-y-y-z-z-z-x-x-x..., while a random block configuration has the general configuration: ...x-x-x-z-z-x-x-y-y-y-y-z-z-z-x-x-z-z-z-....

As used herein, the term "random copolymer" is a copolymer having an uncontrolled mixture of two or more constitutional units. The distribution of the constitutional units throughout a polymer backbone (or main chain) can be a statistical distribution, or approach a statistical distribution, of the constitutional units. In some embodiments, the distribution of one or more of the constitutional units is favored.

As used herein, the term "constitutional unit" of a polymer refers to an atom or group of atoms in a polymer, comprising a part of the chain together with its pendant atoms or groups of atoms, if any. The constitutional unit can refer to a repeat unit. The constitutional unit can also refer to an end group on a polymer chain. For example, the constitutional unit of polyethylene glycol can be $-CH_2CH_2O-$ corresponding to a repeat unit, or $-CH_2CH_2OH$ corresponding to an end group.

As used herein, the term "repeat unit" corresponds to the smallest constitutional unit, the repetition of which constitutes a regular macromolecule (or oligomer molecule or block).

As used herein, the term "end group" refers to a constitutional unit with only one attachment to a polymer chain, located at the end of a polymer. For example, the end group can be derived from a monomer unit at the end of the polymer, once the monomer unit has been polymerized. As another example, the end group can be a part of a chain transfer agent or initiating agent that was used to synthesize the polymer.

As used herein, the term "terminus" of a polymer refers to a constitutional unit of the polymer that is positioned at the end of a polymer backbone.

As used herein, the term "cationic" refers to a moiety that is positively charged, or ionizable to a positively charged moiety under physiological conditions. Examples of cationic moieties include, for example, amino, ammonium, pyridinium, imino, sulfonium, quaternary phosphonium groups, etc.

As used herein, the term "anionic" refers to a functional group that is negatively charged, or ionizable to a negatively charged moiety under physiological conditions. Examples of anionic groups include carboxylate, sulfate, sulfonate, phosphate, etc.

As used herein, when a benzimidazolium has a ring-forming nitrogen atom that is positively charged, it is understood that that the double bond may be located in one of two positions and the positive charge is consequently localized on one of the ring-forming nitrogen atoms:

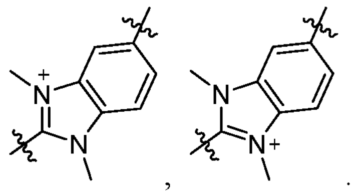

The positive charge can also be illustrated as delocalized between the two ring-forming nitrogen atoms in the benzimidazolium:

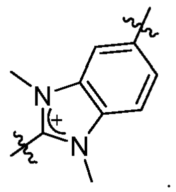

As used herein, "degree of methylation" (dm) refers to the percentage of N-methylation of, for example, a copolymer of Formula (I), below. Thus, if a=100 mol%, the degree of methylation is 50%; if c=100 mol%, the degree of methylation is 100%.

As used herein, the term "consisting essentially of' or "consists essentially of' refers to a composition including the components of which it consists essentially as well as other components, provided that the other components do not materially affect the essential characteristics of the composition. Typically, a composition consisting essentially of certain components will comprise greater than or equal to 95 wt% of those components or greater than or equal to 99 wt% of those components.

Unless otherwise defined, all technical and scientific terms used herein have the same meaning as commonly understood by one of ordinary skill in the art. Although methods and materials similar or equivalent to those described herein can be used in the practice or testing of the present disclosure, suitable methods and materials are described below.

Membrane

This disclosure provides, *inter alia*, a catalyst-coated membrane, including:

(a) a film including a random copolymer of Formula (I)

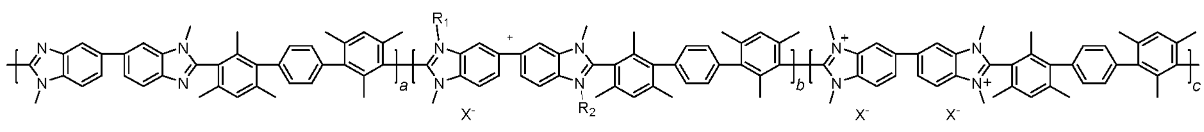

(I)

wherein

X- is an anion selected from iodide, bromide, chloride, fluoride, hydroxide, carbonate, bicarbonate, sulfate, tetrakis(3,5-bis(trifluoromethyl)phenyl)borate, bis(trifluoromethane)sulfonamide, and any combination thereof, wherein $X^-$ counterbalances a positive charge in the polymer;
$R_1$ and $R_2$ are each independently selected from absent and methyl,
provided that $R_1$ and $R_2$ are not both absent, or both methyl;
provided that when one of $R_1$ or $R_2$ is methyl, the other is absent; and
provided that when $R_1$ or $R_2$ is methyl, the nitrogen to which the methyl is connected to is positively charged,
a, b, and c are mole percentages, wherein
a is from 0 mole % to 45 mole % (e.g., from 0 mole % to 35 mole %, from 0 mole % to 25 mole %, from 0 mole % to 10 mole %),
b+c is 55 mole % to 100 mole % (e.g., from 65 mole % to 100 mole %, from 75 mole % to 100 mole %, from 90 mole % to 100 mole %),

b and c are each more than 0 %, and
a+b+c=100%, and

(b) a catalyst coating on the film, the catalyst coating comprising from 5 % to 35 % by weight of the copolymer of Formula (I) and from 65 % to 95 % by weight of a metal or non-metal catalyst, specifically a catalyst selected from carbon-supported Pt, alkaline-stable metal-supported Pt, non-supported Pt, carbon-supported Pt alloy, alkaline-stable metal-supported Pt alloy, non-supported Pt alloy, and any combination thereof; Ag, Ni, alloys thereof, and any combination thereof; a doped graphene; and a doped carbon nanotube.

In some embodiments, the present disclosure features a catalyst-coated membrane, consisting essentially of, or consisting of:

(a) a film including a random copolymer of Formula (I)

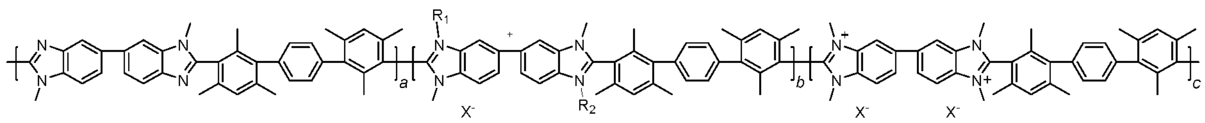

(I)

wherein

X- is an anion selected from iodide, bromide, chloride, fluoride, hydroxide, carbonate, bicarbonate, sulfate, tetrakis(3,5-bis(trifluoromethyl)phenyl)borate, bis(trifluoromethane)sulfonamide, and any combination thereof, wherein $X^-$ counterbalances a positive charge in the polymer;
$R_1$ and $R_2$ are each independently selected from absent and methyl,
provided that $R_1$ and $R_2$ are not both absent, or both methyl;
provided that when one of $R_1$ or $R_2$ is methyl, the other is absent; and
provided that when $R_1$ or $R_2$ is methyl, the nitrogen to which the methyl is connected to is positively charged,
a, b, and c are mole percentages, wherein
a is from 0 mole % to 45 mole % (e.g., from 0 mole % to 35 mole %, from 0 mole % to 25 mole %, from 0 mole % to 10 mole %),
b+c is 55 mole % to 100 mole % (e.g., from 65 mole % to 100 mole %, from 75 mole % to 100 mole %, from 90 mole % to 100 mole %),
b and c are each more than 0 %, and
a+b+c=100%, and

(b) a catalyst coating on the film, the catalyst coating comprising from 5 % to 35 % by weight of the copolymer of Formula (I) and from 65 % to 95 % by weight of a metal or non-metal catalyst, specifically, a catalyst selected from carbon-supported Pt, alkaline-stable metal-supported Pt, non-supported Pt, carbon-supported Pt alloy, alkaline-stable metal-supported Pt alloy, non-supported Pt alloy, and any combination thereof; Ag, Ni, alloys thereof, and any combination thereof; a doped graphene; and a doped carbon nanotube.

Further examples of polymers that can be incorporated into catalyst coated membranes are described in PCT/CA2015/000248, filed April 14, 2015.

In some embodiments, the copolymer of Formula (I) includes from 80 % to 95 % degree of methylation (e.g., from 85 % to 95 % degree of methylation, from 85 % to 90 % degree of methylation, from 85 % to 92 % degree of methylation, from 87 % to 92 % degree of methylation).

In some embodiments, the catalyst coating includes from 10 % to 30 % (e.g., from 10 % to 25 %, from 10 % to 20 %, from 10 % to 15 %, from 15 % to 30 %, from 20 % to 30 %, or from 25 % to 30 %) by weight of the copolymer of Formula (I).

In some embodiments, the catalyst coating includes from 10 % to 65 % (e.g., from 11 % to 65 %, from 15 % to 65 %, from 20 % to 65 %, from 30 % to 65 %, from 40 % to 65 %, from 50 to 65 %, from 10 % to 65 %, from 10 % to 50 %, from 10 % to 40 %, from 10 % to 30 %, from 10 % to 20 %, from 20 % to 30 %, from 20 % to 40 %, from 20 % to 50 %, from 30 % to 40 % or from 30 % to 50) by weight of the metal or non-metal catalyst. The metal catalyst can be, for example, carbon-supported Pt (platinum), alkaline-stable metal-supported Pt, non-supported Pt, carbon-supported Pt alloy, alkaline-stable metal-supported Pt alloy, non-supported Pt alloy, and/or any combination thereof. In some

embodiments, the alkaline-stable metal-supported Pt is Sn (tin)-supported Pt, Ti (titanium)-supported Pt, Ni (nickel)-supported Pt, and/or any combination thereof. In some embodiments, the alkaline-stable metal-supported Pt alloy is Sn-supported Pt alloy, Ti-supported Pt alloy, Ni-supported Pt alloy, and/or any combination thereof. In some embodiments, the carbon-supported Pt includes from 20 % by weight to 50 % by weight (e.g., from 20 % to 40 % by weight, from 30 % to 50 % by weight, or from 30 % to 40% by weight) of Pt. In some embodiments, the metal catalyst is selected from supported Pt black and non-supported Pt black. In certain embodiments, the Pt alloy can be a Pt-Ru (ruthenium) alloy, a Pt-Ir (iridium) alloy, and/or a Pt-Pd (palladium) alloy. In some embodiments, the metal catalyst is selected from Ag, Ni, alloys thereof, and any combination thereof.

The non-metal catalyst is a doped graphene (e.g., a doped reduced graphene oxide) and/or a doped carbon nanotube. In some embodiments, the non-metal catalyst is a doped graphene. The doped graphene can be, for example, a graphene that is doped with S (sulfur), N (nitrogen), F (fluorine), a metal, and/or a combination thereof. In certain embodiments, the doped graphene can be, for example, a graphene that is doped with S, N, F, and/or a combination thereof. In certain embodiments, the doped graphene is a F, N, and S doped reduced graphene oxide. In some embodiments, the non-metal catalyst is a doped carbon nanotube. The doped carbon nanotube can be, for example, a carbon nanotube that is doped with S (sulfur), N (nitrogen), F (fluorine), a metal, and/or a combination thereof. In certain embodiments, the doped carbon nanotube can be, for example, a carbon nanotube that is doped with S, N, F, and/or a combination thereof. In certain embodiments, the doped carbon nanotube is a F, N, and S doped carbon nanotube.

According to the present invention, the catalyst coating on the film comprises from 5 % to 35 % by weight of the copolymer of Formula (I) and from 10 % to 95 % by weight of a catalyst selected from carbon-supported Pt, alkaline-stable metal-supported Pt, non-supported Pt, carbon-supported Pt alloy, alkaline-stable metal-supported Pt alloy, non-supported Pt alloy, and any combination thereof; Ag, Ni, alloys thereof, and any combination thereof; a doped graphene; and a doped carbon nanotube.

In some embodiments, the membrane undergoes less than 5% (e.g., less than 3 %, less than 1 %) ring opening degradation, as determined by proton nuclear magnetic resonance (NMR) spectroscopic analysis, when subjected to an aqueous solution comprising from 1 M to 6 M hydroxide at room temperature for at least 168 hours.

In some embodiments, a copolymer of Formula (I) is hexamethyl-p-terphenyl poly(benzimidazolium), HMT-PMBI, which can be prepared by methylation of poly[2,2'-(2,2",4,4",6,6"-hexamethyl-*p*-terphenyl-3,3"-diyl)-5,5'-bibenzimidazole] (HMT-PBI). The polymer can be used as both the polymer electrolyte membrane and ionomer in an alkaline anion-exchange membrane fuel cell and alkaline polymer electrolyzer. A fuel cell including a catalyst-coated membrane including the copolymer of Formula (I), when operated between 60 and 90 °C and subjected to operational shutdown, restarts, and $CO_2$-containing air, can have remarkable *in situ* stability for >4 days, over which its performance improved over time. When similarly operated in a water electrolyzer with circulating 1 M KOH electrolyte at 60 °C, the membrane performance can be unchanged after 8 days of operation. In a fully-hydrated chloride form, polymer membranes of the present disclosure can be mechanically strong, and have a tensile strength and Young's modulus that is significantly higher than Nafion 212, for example. The hydroxide anion form of a membrane including a copolymer of Formula (I) can have remarkable *ex situ* chemical and mechanical stability and be relatively unchanged after a 7 days exposure to 1 M NaOH at 80 °C or 6 M NaOH at 25 °C. The membrane can exhibit little to no chemical degradation when exposed to 2 M NaOH at 80 °C for 7 days. Furthermore, polymers of the present disclosure can be soluble in low boiling solvents such as methanol, and allow for processability by a variety of casting or coating methods and incorporation of the polymers into catalyst inks.

## Fuel cells

The present disclosure features a fuel cell that includes a catalyst-coated membrane described above. The catalyst-coated membrane can have two sides, where one side of the catalyst-coated membrane is a cathode, and the other side of the catalyst-coated membrane is an anode. The catalyst-coated membrane can be a pre-conditioned catalyst-coated membrane, such as a pre-conditioned catalyst-coated membrane that is obtained by immersing the catalyst-coated membrane in a 1 M to 2 M aqueous hydroxide solution for 1 to 24 hours (e.g., 1 to 12 hours, 12 to 24 hours, or 6 to 18 hours).

In some embodiments, the fuel cell is made by (a) pre-conditioning a catalyst-coated membrane above by contacting the catalyst-coated membrane with an aqueous hydroxide solution for at least 1 hour to provide a pre-conditioned catalyst-coated membrane; and (b) incorporating the pre-conditioned catalyst-coated membrane into a fuel cell.

In some embodiments, the fuel cell is made by (a) incorporating a catalyst-coated membrane above into a fuel cell; and (b) pre-conditioning the fuel cell by contacting the catalyst-coated membrane with an aqueous hydroxide solution for at least 1 hour to provide a pre-conditioned catalyst-coated membrane. In some embodiments, after contacting the catalyst-coated membrane with an aqueous hydroxide solution, the catalyst-coated membrane can be contacted with water for at least 1 day.

In some embodiments, in the fuel cell, the catalyst-coated membrane is a random copolymer of Formula (I), wherein $X^-$ is an anion such as iodide, bromide, chloride, fluoride, and/or any combination thereof; after immersing the catalyst-coated membrane in a 1 M to 2 M aqueous hydroxide solution for 1 to 24 hours, $X^-$ is exchanged for an anion such as hydroxide, carbonate, bicarbonate, and/or any combination thereof.

The catalyst-coated membrane can include a cathode catalyst loading of 0.1 mg to 5 mg (e.g., 0.1 mg to 4 mg, 0.1 mg to 3 mg, 0.1 mg to 2 mg, 0.1 mg to 1 mg, 1 mg to 5 mg, 1.0 mg to 4 mg, 1.0 mg to 3 mg, 1.0 to 2 mg, 2 mg to 5 mg, 2 mg to 4 mg, 2 mg to 3 mg, 3 mg to 5 mg, or 3 mg to 4 mg) metal or non-metal catalyst per $cm^2$ and an anode catalyst loading of 0.1 mg to 5.0 mg (e.g., 0.1 mg to 4 mg, 0.1 mg to 3 mg, 0.1 mg to 2 mg, 0.1 mg to 1 mg, 1 mg to 5 mg, 1.0 mg to 4 mg, 1.0 mg to 3 mg, 1.0 to 2 mg, 2 mg to 5 mg, 2 mg to 4 mg, 2 mg to 3 mg, 3 mg to 5 mg, or 3 mg to 4 mg) metal or non-metal catalyst per $cm^2$.

In certain embodiments, the catalyst-coated membrane includes a cathode catalyst loading of 0.1 mg to 1.0 mg (e.g., 0.1 mg to 0.8 mg, 0.1 mg to 0.6 mg, 0.1 mg to 0.5 mg, 0.1 mg to 0.4 mg, 0.1 to 0.3 mg, 0.1 to 0.2 mg, 0.3 mg to 1.0 mg, 0.5 mg to 1.0 mg, 0.7 mg to 1.0 mg, 0.3 mg to 0.8 mg, 0.3 mg to 0.5 mg) of a metal or non-metal catalyst per $cm^2$ and an anode catalyst loading of 0.1 mg to 1.0 mg (e.g., 0.1 mg to 0.8 mg, 0.1 mg to 0.6 mg, 0.1 mg to 0.5 mg, 0.1 mg to 0.4 mg, 0.1 mg to 0.3 mg, 0.1 to 0.2 mg, 0.3 mg to 1.0 mg, 0.5 mg to 1.0 mg, 0.7 mg to 1.0 mg, 0.3 mg to 0.8 mg, 0.3 mg to 0.5 mg) of a metal or non-metal catalyst per $cm^2$. In some embodiments, the catalyst-coated membrane includes a cathode catalyst loading of 0.1 mg to 0.5 mg of a metal or non-metal catalyst per $cm^2$ and an anode catalyst loading of 0.1 mg to 0.5 mg of a metal or non-metal catalyst per $cm^2$.

In some embodiments, the fuel cell is capable of operating at a power density of 20 $mW/cm^2$ or more (e.g., 25 $mW/cm^2$ or more, or 30 $mW/cm^2$ or more), at 60 °C to 90 °C, for more than 4 days. In some embodiments, the power densities of the fuel cell is 1 $W/cm^2$ or greater (e.g., for an optimized fuel cell). In some embodiments, when the fuel cell is shut down after a period of operation and restarted, the fuel cell is capable operating with a decrease of 5 % or less (e.g., 3 % or less, 1 % or less) in power density within 6 hours of restarting.

The fuel cell can be operated in an atmosphere comprising carbon dioxide, oxygen, and water at the cathode. In some embodiments, the fuel cell is operated in an oxygen and water atmosphere at the cathode. In certain embodiments, the fuel cell is operated in a carbon dioxide-free atmosphere at the cathode.

The fuel cell can be operated in a hydrogen atmosphere at the anode. In some embodiments, the fuel cell is operated in an atmosphere that includes methanol, ethanol, hydrazine, formaldehyde, ethylene glycol, or any combination thereof at the anode.

## Methods of use

The present disclosure also features, *inter alia*, a method of operating a fuel cell described above, including (a) conditioning the fuel cell by supplying hydrogen to the anode, and oxygen and water to the cathode, and operating the fuel cell to generate electrical power and water at a potential of 1.1 V to 0.1 V (e.g., 1.1 V to 0.3 V, 1.1 V to 0.5 V, 1.1 V to 0.8 V, 0.8 V to 0.3 V, 0.8 V to 0.5 V, 0.8 V to 0.6 V, 0.6 to 0.2 V, or 0.6 V to 0.4 V) and at a temperature of 20 °C to 90 °C (e.g., 40 °C to 90 °C, 40 °C to 70 °C, 60 °C to 90 °C, or 60 °C to 90 °C), until the fuel cell reaches at least 90 % of peak performance (e.g., at least 95 % of peak performance, at least 99 % of peak performance, or 99 % of peak performance); and (b) continuing supplying hydrogen to the anode and oxygen and water to the cathode, and operating the fuel cell at a potential of 1.1 V to 0.1 V (e.g., 1.1 V to 0.3 V, 1.1 V to 0.5 V, 1.1 V to 0.8 V, 0.8 V to 0.3 V, 0.8 V to 0.5 V, 0.8 V to 0.6 V, 0.6 to 0.2 V, or 0.6 V to 0.4 V) and a temperature of 20 °C to 90 °C (e.g., 40 °C to 90 °C, 40 °C to 70 °C, 60 °C to 90 °C, or 60 °C to 90 °C).

In some embodiments, the catalyst-coated membrane is treated with aqueous hydroxide prior to conditioning the fuel cell. In some embodiments, the catalyst-coated membrane is exposed to carbon dioxide prior to conditioning the fuel cell.

During operation of the fuel cell, the maximum power density can increase (e.g., increase by 5 %, increase by 10 %, increase by 15 %, increase by 20 %, increase by 30 %, or increase by 50 % compared to initial maximum power density).

In addition to steps (a) and (b) above, the method can further include:

(c) stopping the supply of hydrogen to the anode and/or oxygen and water to the cathode (e.g., stopping the supply of hydrogen to the anode and oxygen and water to the cathode) to stop operation of the fuel cell;
(d) cooling the fuel cell to below 40 °C (e.g., or below 30 °C); and
(e) reconditioning the fuel cell by supplying hydrogen to the anode, and oxygen and water to the cathode, and operating the fuel cell to generate electrical power and water at a potential of 1.1 V to 0.1V (e.g., 1.1 V to 0.3 V, 1.1 V to 0.5 V, 1.1 V to 0.8 V, 0.8 V to 0.3 V, 0.8 V to 0.5 V, 0.8 V to 0.6 V, 0.6 to 0.2 V, or 0.6 V to 0.4 V) and at a temperature of 20 °C to 90 °C (e.g., 40 °C to 90 °C, 40 °C to 70 °C, 60 °C to 90 °C, or 60 °C to 90 °C).

Supplying oxygen to the cathode can include supplying a mixture of oxygen, carbon dioxide, and water to the cathode.

In some embodiments, the fuel cell has a performance that decreases by less than 5% (e.g., 3 % or less, 1 % or less) in power density and/or increases by less than 5% (e.g., 3 % or less, 1 % or less) in total resistance within 6 hours of reconditioning the fuel cell, wherein the performance is determined by a total resistance in an Ohmic region measured using a current-interrupt method, a high-frequency resistance method, or both, and/or wherein the performance is determined by a peak power density in polarization data measured by increasing current from open circuit at set intervals of 20-200 mA/cm$^2$ at a time of 1 minute or more per point.

In some embodiments, the fuel cell is operated at a temperature of 20 °C to 90 °C, and the fuel cell has a power density of greater than 25 mW/cm$^2$ (e.g., greater than 30 mW/cm$^2$ or more, or greater than 35 mW/cm$^2$).

## Water electrolyzer

In present disclosure also features, inter alia, a water electrolyzer, including a catalyst-coated membrane above, wherein the catalyst-coated membrane has two sides, and one side of the catalyst-coated membrane is a cathode, and the other side of the catalyst-coated membrane is an anode. The catalyst-coated membrane can include a cathode catalyst loading of 0.1 mg to 5 mg (e.g., 0.1 mg to 4 mg, 0.1 mg to 3 mg, 0.1 mg to 2 mg, 0.1 mg to 1 mg, 1 mg to 5 mg, 1.0 mg to 4 mg, 1.0 mg to 3 mg, 1.0 to 2 mg, 2 mg to 5 mg, 2 mg to 4 mg, 2 mg to 3 mg, 3 mg to 5 mg, or 3 mg to 4 mg) metal or non-metal catalyst per cm$^2$ and an anode catalyst loading of 0.1 mg to 5.0 mg (e.g., 0.1 mg to 4 mg, 0.1 mg to 3 mg, 0.1 mg to 2 mg, 0.1 mg to 1 mg, 1 mg to 5 mg, 1.0 mg to 4 mg, 1.0 mg to 3 mg, 1.0 to 2 mg, 2 mg to 5 mg, 2 mg to 4 mg, 2 mg to 3 mg, 3 mg to 5 mg, or 3 mg to 4 mg) metal or non-metal catalyst per cm$^2$.

The electrolyzer can be made by (a) incorporating a catalyst-coated membrane described above into the electrolyzer; and (b) pre-conditioning the electrolyzer by contacting the catalyst-coated membrane with an aqueous hydroxide solution for at least 1 hour to provide a pre-conditioned catalyst-coated membrane.

In some embodiments, the electrolyzer is made by (a) pre-conditioning a catalyst-coated membrane described above by contacting the catalyst-coated membrane with an aqueous hydroxide solution for at least 1 hour to provide a pre-conditioned catalyst-coated membrane; and (b) incorporating the pre-conditioned catalyst-coated membrane into an electrolyzer.

In some embodiments, after contacting the catalyst-coated membrane with an aqueous hydroxide solution, the catalyst-coated membrane is contacted with water for at least 7 days (e.g., at least 10 days, or at least 14 days).

In some embodiments, the water electrolyzer is capable of being operated at 25 mA/cm$^2$ or more for 144 hours or more (e.g., 175 hours or more, 200 hours or more), at an overall applied potential of 1.6 V or more (e.g., 1.8 V or more). In some embodiments, the water electrolyzer is capable of being operated at a pressure at the cathode of up to 30 bar (e.g., up to 25 bar, or up to 20 bar) and a pressure at the anode of up to 30 bar (e.g., up to 25 bar, or up to 20 bar), the pressure at the cathode and the pressure at the anode can be the same or different.

In some embodiments, when the water electrolyzer is shut down after a period of operation and restarted, the water electrolyzer is capable of operating with less than a 5 % increase (e.g., less than 3 % increase, or less than 1 % increase) in potential at a current density achieved within 6 hours of restarting the water electrolyzer.

## Methods of use

The water electrolyzer of the present disclosure can be operated by (a) providing water or an aqueous hydroxide electrolyte solution at 20 °C to 80 °C (e.g., 40 °C to 90 °C, 40 °C to 70 °C, 60 °C to 90 °C, or 60 °C to 90 °C) to the anode, the cathode, or both the anode and the cathode of the water electrolyzer; and (b) operating the water electrolyzer to generate hydrogen, oxygen, and water. In some embodiments, the water or the aqueous hydroxide electrolyte solution is provided alternately to the cathode and the anode.

In some embodiments, prior to step (a), the electrolyzer is further pre-conditioned by contacting the catalyst-coated membrane with an aqueous hydroxide solution for at least 1 hour.

An example of a membrane of the present disclosure, including hexamethyl-p-terphenyl poly(benzimidazolium), is provided in Example 1 below, and illustrates a hydroxide-conducting polymer that can be used for energy conversion devices. Example 2, below, illustrates the use of a F-, N-, and S-doped metal free reduced graphene oxide catalyst that is used in a membrane including hexamethyl-p-terphenyl poly(benzimidazolium) for energy conversion devices.

## EXAMPLES

### Example 1. Hexamethyl-p-terphenyl poly(benzimidazolium)

A hydroxide-conducting polymer, hexamethyl-p-terphenyl poly(benzimidazolium), HMT-PMBI, was prepared

by methylation of poly[2,2'-(2,2",4,4",6,6"-hexamethyl-*p*-terphenyl-3,3"-diyl)-5,5'-bibenzimidazole] (HMT-PBI), and was utilized as both the polymer electrolyte membrane and ionomer in an alkaline anion-exchange membrane fuel cell and alkaline polymer electrolyzer. HMT-PBI was prepared as described, for example, in A. G. Wright and S. Holdcroft, ACS Macro Lett., 2014, 3, 444-447. A fuel cell operating between 60 and 90°C and subjected to operational shutdown, restarts, and $CO_2$-containing air, demonstrated remarkable *in situ* stability for >4 days, over which its performance improved over time. An HMT-PMBI-based fuel cell was operated at current densities >1000 mA $cm^{-2}$ and power densities of 370 mW $cm^{-2}$ at 60 °C. When similarly operated in a water electrolyzer with circulating 1 M KOH electrolyte at 60 °C, its performance was unchanged after 8 days of operation. Methodology for up-scaled synthesis of HMT-PMBI is also described below, wherein >½ kg was synthesized in six steps with a yield of 42%. Each step was optimized to achieve high batch-to-batch reproducibility. Water uptake, dimensional swelling, and ionic conductivity of HMT-PMBI membranes exchanged with various anions are described. In the fully-hydrated chloride form, HMT-PMBI membranes were mechanically strong, and possessed a tensile strength and Young's modulus of 33 MPa and 225 MPa, respectively, which is significantly higher than Nafion 212, for example. The hydroxide anion form shows remarkable *ex situ* chemical and mechanical stability and appeared unchanged after a 7 days exposure to 1 M NaOH at 80 °C or 6 M NaOH at 25°C. Only 6% chemical degradation was observed when exposed to 2 M NaOH at 80 °C for 7 days. The ease of synthesis, synthetic reproducibility, scale up, and exceptional *in situ* and *ex situ* properties of HMT-PMBI presented a useful polymer for energy conversion devices requiring an anion-exchange material.

A polymeric material that has been demonstrated to exhibit exceptional chemical stability is based on poly[2,2'-(2,2",4,4",6,6"-hexamethyl-*p*-terphenyl-3,3"-diyl)-5,5'-bibenzimidazole] (HMT-PBI), which can be controllably methylated to form HMT-PMBI, as shown in FIGURE 1.

The HMT-PMBI ionene possesses steric hindrance around the $C_2$-position as well as increased spacing between benzimidazolium groups, thus having enhanced stability against hydroxide ion attack. Referring to FIGURE 1, HMT-PMBI is composed of three distinct units: repeat unit *a* represents a monomer unit possessing 50% degree of methylation (dm), unit *b* represents 75% dm, and unit *c* represents a unit possessing 100% dm. As the degree of methylation is increased, the ion exchange capacity (IEC), water uptake, and conductivity of the membrane are increased. For a fully methylated derivative (100% dm), the polymer is soluble in water in its hydroxide ion form. However, a polymer methylated to ≤92% dm and converted to its hydroxide ion form is insoluble in water and shows no observable degradation when dissolved in a 2 M KOH methanol solution at 60 °C for 8 days. Additionally, the solubility of these cationic polymers in low boiling solvents such as methanol allows for processability by a variety of casting or coating methods and incorporation of the polymers into catalyst inks.

In this example, the up-scaled synthesis of HMT-PMBI is presented, showing the versatility and reproducibility of its modified synthesis. Additionally, large scale synthesis allowed for extensive characterization of ionene-based membranes and elucidation of properties. Every synthetic step was addressed for high yield and high purity, particularly the post-functionalization steps, where the yield is improved by >20% compared to a previous report. The 89% dm HMT-PMBI polymer, possessing a theoretical $OH^-$ IEC of 2.5 mmol $g^{-1}$, was chosen for extensive study due to the balance of high conductivity and low water uptake. The tensile strength and elongation at break were compared to commercial proton-exchange ionomer materials. Water uptake, dimensional swelling, and conductivity of various anions were determined and the upper limit of stability was found using extensive degradation tests. By utilizing the material as both the membrane and ionomer in an alkaline AEMFC and water electrolyzer for more than 4 days, the stable cationic polymer was demonstrated to operate between 60 and 90 °C incorporating shutdowns, restarts, and exposure to $CO_2$ during the operational cycle.

## Synthesis

Materials and chemicals. Chemicals were purchased from Sigma Aldrich unless otherwise noted. Acetic acid (glacial) and potassium iodide (99.0%) were purchased from Caledon Laboratories Ltd.. Mesitoic acid (98%) and 1,4-phenylenediboronic acid (97%) were purchased from Combi-Blocks, Inc.. Ethanol (anhydrous grade) was purchased from Commercial Alcohols. Potassium hydroxide (ACS grade, pellets) was purchased from Macron Fine Chemicals. Dimethylsulfoxide (spectrograde), potassium carbonate (99.0%), potassium chloride (ACS grade), sodium bicarbonate (ACS grade), and hexanes (ACS grade) were purchased from ACP Chemicals Inc.. Methylene chloride (ACS grade, stabilized), silica (230-400 mesh, grade 60), sodium dithionite, acetone (ACS grade), methanol (ACS grade), and sodium chloride (ACS grade) were purchased from Fisher Scientific. Chloroform (ACS grade) and sodium hydroxide (ACS grade) were purchased from BDH. Activated charcoal (G-60) and hydrochloric acid (ACS grade) were purchased from Anachemia. Tetrakis(triphenylphosphine)palladium (99%) was purchased from Strem Chemicals. Dimethylsulfoxide-$d_6$ (99.9%-D), chloroform-D (99.8%-D), and methylene chloride-$d_2$ (99.9%-D) were purchased from Cambridge Isotope Laboratories, Inc.. Nuclear magnetic resonance (NMR) spectra were obtained on a 400 or 500 MHz Bruker AVANCE III running IconNMR under Top Spin 2.1. The residual $^1H$ NMR (nuclear magnetic resonance) solvent peaks for DMSO-$d_6$, $CDCl_3$, and $CD_2Cl_2$ were set to 2.50 ppm, 7.26 ppm, and 5.36 ppm, respectively. The residual $^{13}C$ NMR solvent peaks for

DMSO-$d_6$ and $CDCl_3$ were set to 39.52 ppm and 77.16 ppm, respectively. All NMR solutions had a solution concentration between 20 and 80 g/L. The conductivity measurements under controlled humidity and temperature were collected in an Espec SH-241 chamber. The 5 L reactor used was a cylindrical jacketed flask (all glass), allowing the temperature to be controlled by a circulation of oil around the reactant mixture, which was generally a different temperature than the measured internal (reactant mixture) temperature. Eaton's reagent was prepared prior to polymerization by stirring $P_2O_5$ (308.24 g) in methanesulfonic acid (2.5 L) at 120 °C under argon until dissolved, where it was then stored in sealed glass bottles until needed. Deionized water (DI water) was purified to 18.2 MΩ cm using a Millipore Gradient Milli-Q® water purification system. MBIM-$I^-$ (2-mesityl-1,3-dimethyl-1*H*-benzimidazolium iodide) was synthesized according to literature.

Synthesis of 3-bromomesitoic acid (BMA)

To a 5 L reactor was added glacial acetic acid (1.0 L) followed by mesitoic acid (225.1g, 1.37 mol). The circulator temperature was set to 28.0 °C and mechanical stirred at 140 rpm. More glacial acetic acid was added (1.0 L) and stirred for approximately 30 min until the mesitoic acid fully dissolved. Bromine (100 mL, 1.95 mol) was added slowly over 5 min followed by glacial acetic acid (500 mL) to rinse down the sides. After 10 min, the internal temperature was observed to be 10 °C. The red mixture was stirred for 50 min, whereupon the internal temperature returned to approximately 25 °C. The mixture was then transferred by liquid transfer pump and PTFE tubing into 9 L of stirring distilled water (3 x 4 L beakers). The foamy precipitate was collected by vacuum filtration (requiring multiple funnels to collect all solid), compressed with a wide spatula to better dry the solid, and washed with water until white (~2 L total). The cakes were transferred to a 4 L beaker. The solid was recrystallized from approximately 2750 mL of 60% ethanol by boiling and then cooling to room temperature. The fluffy needles were collected by vacuum filtration, washed with room temperature 33% ethanol, and thoroughly dried at 80 °C under vacuum. This resulted in approximately 320 g of white needles. Two of these batches were combined and recrystallized a second time in 2700 mL of 55% ethanol, collected, washed with 33% ethanol, and dried under vacuum at 80 °C to yield 577.5 g of BMA as white fluffy needles (86.6%). $^1H$ NMR (500 MHz, DMSO-$d_6$, ppm) δ: 13.33 (s, 1H), 7.09 (s, 1H), 2.33 (s, 3H), 2.32 (s, 3H), 2.19 (s, 3H). $^{13}C$ NMR (125 MHz, DMSO-$d_6$, ppm) δ: 170.02, 138.09, 135.11, 132.86, 132.19, 129.95, 124.45, 23.44, 20.88, 18.71. This procedure was repeated once more. The resulting data is shown in **Table 1.**

**Table 1.** Yield of BMA for each reaction performed.

| Reaction # | Yield (g) | Yield (%) |
|---|---|---|
| 1 | 587.6 | 88.2 |
| 2 | 577.5 | 86.6 |

Synthesis of methyl 3-bromomesitoate (BME)

Potassium hydroxide pellets (36.0 g, 0.64 mol) were ground with a mortar and pestle to a fine powder and added to a 1 L round-bottom flask followed by dimethyl sulfoxide (DMSO) (360 mL). The mixture was vigorously stirred for 30 min. BMA (104.4 g, 0.43 mol) was separately dissolved in DMSO (360 mL) and then added to the basic DMSO mixture, stirring for 15 min at room temperature. Iodomethane (40 mL, 0.64 mol) was then slowly added to the mixture (*exothermic*, temperature was kept below 40 °C) and then stirred closed for 2 h at room temperature. The mixture was then poured into 5 L of stirring ice-water and left stirring at room temperature until all of the ice melted. The precipitate was collected by vacuum filtration, thoroughly washed with water, and dried under vacuum at room temperature for at least 24 h to produce 106.1 g of BME as white crystals (96.4% yield). $^1H$ NMR (400 MHz, DMSO-$d_6$, ppm) δ: 7.12 (s, 1H), 3.85 (s, 3H), 2.34 (s, 3H), 2.26 (s, 3H), 2.15 (s, 3H). The above procedure represents a "1.0 Scale". For repeated syntheses, "2.0 Scale" represents the procedure being performed twice simultaneously and the final collected precipitates being combined prior to drying. The resulting data is shown in **Table 2.**

**Table 2.** Yield of BME and respective reaction scale for each reaction performed.

| Reaction # | Scale | Yield (g) | Yield (%) |
|---|---|---|---|
| 1 | 1.0 | 106.1 | 96.4 |
| 2+3 | 2.0 | 218.4 | 99.2 |
| 4+5 | 2.0 | 214.8 | 97.5 |

(continued)

| Reaction # | Scale | Yield (g) | Yield (%) |
|---|---|---|---|
| 6+7 | 2.0 | 219.2 | 99.5 |
| 8+9 | 2.0 | 218.9 | 99.4 |
| 10+11 | 2.2 | 246.3 | 99.4 |

Monomer (HMTE) synthesis

To the 5 L reactor was added 1,4-dioxane (2.9 L), BME (150.0 g, 0.58 mol), 1,4-phenylenediboronic acid (48.4 g, 0.29 mol), and 2 M $K_2CO_3$ (950 mL). The reactor was connected to a water-cooled condenser and the mixture was degassed by bubbling argon through a needle sub-surface for 1 h. The needle was removed and $Pd(PPh_3)_4$ (1.80 g, 0.27% mol per BME) was added under a flow of argon. The circulator temperature was set to 105 °C and the solution was mechanically stirred at 280 rpm for 22 h, where the internal temperature read 89 °C. The dark yellow solution was then cooled to 60 °C and transferred by liquid transfer pump equally into 4 x 4 L beakers, each containing boiling and stirring 43% ethanol (2.62 L, aq.). The mixtures were stirred until they reached room temperature. The dark grey precipitates were collected by vacuum filtration and washed with water. The solid was dissolved in dichloromethane (1.0 L), washed with water (300 mL), and passed through a thick silica pad (~300 g). More dichloromethane (~4L) was used to flush the silica and the filtrate was then evaporated by rotary evaporation to a pale yellow solid. The solid was then recrystallized in hexanes (5 L) by boiling until dissolved and cooling to -14 °C overnight. The white crystals were collected by vacuum filtration, washed with hexanes (400 mL), and dried under vacuum at 110°C to yield 68.0 g of HMTE as fluffy, pure white crystals (54% yield). $^1$H NMR (400 MHz, $CDCl_3$, ppm) δ: 7.15 (s, 4H), 7.00 (s, 2H), 3.92 (s, 6H), 2.33 (s, 6H), 2.03 (dd, *J* = 9.0, 4.3 Hz, 12H). $^{13}$C NMR (100 MHz, $CDCl_3$, ppm) δ: 171.12, 139.82, 139.07, 137.72, 133.46, 132.82, 132.81, 132.30, 132.28, 129.48, 129.18, 129.17, 52.07, 21.04, 21.00, 19.57, 18.19, 18.15. The above procedure represents a "1.0 Scale". For repeated syntheses, "Scale" represents an appropriately scaled version of all reactants and solvents by that factor. The amount of catalyst used was lowered for each subsequent reaction. The resulting data is shown in **Table 3.**

**Table 3.** Yield of HMTE, reaction scale, and amount of $Pd(PPh_3)_4$ used for each reaction performed.

| Reaction # | Scale | $Pd(PPh_3)_4$ used (per mol% BME) | Yield (g) | Yield (%) |
|---|---|---|---|---|
| 1 | 0.80 | 2.92 g (0.54%) | 55.6 | 55.3 |
| 2 | 1.00 | 1.80 g (0.27%) | 68.0 | 54.1 |
| 3 | 1.00 | 1.70 g (0.25%) | 70.8 | 56.4 |
| 4 | 1.00 | 1.51 g (0.22%) | 72.1 | 57.4 |
| 5 | 1.00 | 1.01 g (0.15%) | 72.2 | 57.5 |
| 6 | 1.00 | 0.79 g (0.12%) | 68.9 | 54.9 |
| 7 | 1.00 | 0.53 g (0.08%) | 71.9 | 57.3 |
| 8 | 1.17 | 0.77 g (0.10%) | 86.3 | 58.7 |

Purification of 3,3'-diaminobenzidine (DAB)

A 2 L Erlenmeyer flask was filled with distilled water. The water was boiled while bubbling with argon. The bubbling of argon was stopped and then, using an inverted glass funnel, a low flow of argon was kept over the solution for the next steps. The as-received DAB (25.0 g) was added to the boiling water and stirred until dissolved. While boiling the solution, sodium dithionite (0.50 g) was added and stirred for 15 min. Activated charcoal (3.00 g) was then added and boiled for 30 min. The mixture was then quickly vacuum filtered through a hot funnel, producing a colorless filtrate. Argon was flowed through the filter flask and it was then kept sealed in the dark for 18 h. The resulting precipitate was then collected by vacuum filtration, washed with water, and quickly dried under vacuum at 100 °C. The collected recrystallized DAB was stored in the dark under argon until use. The purification process was repeated on more as-received DAB from different companies and the resulting data is shown in **Table 4.**

**Table 4.** Yield of DAB after recrystallization and the respective appearance.

| Reaction # | Company[a] | DAB used (g) | Yield (g) | Yield (%) | Appearance |
|---|---|---|---|---|---|
| 1 | 1 | 50.0 | 45.0 | 90.0 | white/sandy sheets |
| 2 | 1 | 50.0 | 42.8 | 85.6 | white/sandy sheets |
| 3 | 2 | 50.0 | 42.7 | 85.4 | long-pointed sandy-sheets |
| 4 | 2 | 50.0 | 42.3 | 84.6 | large sandy-sheets |
| 5 | 2 | 50.0 | 42.5 | 85.0 | small sandy sheets |
| 6 | 2 | 50.0 | 42.6 | 85.2 | very large pointed sandy sheets (glass shards) |
| 7 | 2 | 25.0 | 19.4 | 77.6 | largest pointed yellowish sheets (glass shards) |

[a]from which company the DAB was purchased. Company 1 refers to TCI America and the DAB was received with 98% purity. Company 2 refers to Kindchem (Nanjing) Co., Ltd and the DAB was received with 98% purity.

Polymerization (HMT-PBI)

To a 1 L, 3-neck round-bottom flask was added HMTE (20.0000 g, 46.5 mmol), recrystallized DAB (9.9535 g, 46.5 mmol), and Eaton's reagent (800 mL, self-prepared). Argon was flowed into the flask and out through a $CaCl_2$ drying tube throughout the reaction. This mixture was heated at 120°C until fully dissolved. After heating at 120°C for 30 min, the temperature was increased to 140°C for 20 min. The black solution was then slowly poured into distilled water (3.0 L) with manual stirring to break up the dense fibrous solid that formed. The solid was collected by vacuum filtration on glass fiber and washed with distilled water (1.5 L). The solid was then transferred to fresh distilled water (3.5 L) and the pH was adjusted to ~10 by addition of potassium carbonate (~70 g). The mixture was stirred overnight at room temperature. The solid was collected again, washed with water, boiling water, and acetone, and dried for at least 24 h at 100°C to yield 26.0 g of HMT-PBI as fibrous solid (103% yield). The overestimated yield is likely due to trace water and acid in the fibrous solid, which will be later discussed. For $^1H$ NMR spectroscopy, HMT-PBI (~13.0 mg) was dissolved in DMSO-$d_6$ (0.65 mL) by addition of KOD (5 drops of KOD 40 wt% in $D_2O$) and heating. $^1H$ NMR (400 MHz, DMSO-$d_6$, ppm) $\delta$: 7.76-7.51 (m, 2H), 7.51-7.32 (m, 2H), 7.32-7.15 (m, 4H), 7.16-7.02 (m, 2H), 7.02-6.83 (m, 2H), 2.27-1.91 (m, 12H), 1.91-1.70 (m, 6H). For repeated syntheses, the same method above was used and the resulting data is shown in **Table 5.**

**Table 5.** Yield of HMT-PBI with the respective DAB batch used for each reaction performed.

| Reaction # | DAB batch | Yield (g) | Yield (%) | Appearance/Notes |
|---|---|---|---|---|
| 1 | 1 | 26.0 | 102.8 | off-white fibrous solid |
| 2 | 1 | 26.9 | 106.3 | off-white fibrous solid |
| 3 | 1 | 25.9 | 102.4 | off-white fibrous solid |
| 4 | 1+2 | 25.8 | 102.0 | off-white fibrous solid[a] |
| 5 | 2 | 27.2 | 107.5 | off-white fibrous solid[a] |
| 6 | 2 | 25.6 | 101.2 | off-white fibrous solid |
| 7 | 2 | 26.2 | 103.5 | thick off-white fibers[b] |
| 8 | 2+3 | 25.6 | 101.2 | thick white fibrous solid |
| 9 | 3 | 25.5 | 100.8 | thick white fibrous solid |
| 10 | 3 | 25.4 | 100.4 | thick white fibrous solid |
| 11 | 3 | 26.2 | 103.5 | thick white fibrous solid |
| 12 | 3+4 | 25.8 | 102.0 | thick white fibrous solid |
| 13 | 4 | 25.7 | 101.6 | thick white fibrous solid |
| 14 | 4 | 27.3 | 107.9 | thick white fibrous solid[c] |

(continued)

| Reaction # | DAB batch | Yield (g) | Yield (%) | Appearance/Notes |
|---|---|---|---|---|
| 15 | 4 | 24.7 | 97.6 | thick white fibrous solid[c] |
| 16 | 4 | 25.3 | 100.0 | thick white fibrous solid |
| 17 | 4+5 | 25.5 | 100.8 | thin white fibrous solid |
| 18 | 5 | 25.5 | 100.8 | thin white fibrous solid |
| 19 | 5 | 25.7 | 101.6 | thin white fibrous solid |
| 20 | 5 | 25.4 | 100.4 | thin white fibrous solid |
| 21 | 5+6 | 25.6 | 101.2 | thin white fibrous solid |
| 22 | 6 | 26.2 | 103.5 | very thick white fibrous solid |
| 23 | 6 | 25.9 | 102.4 | very thick white fibrous solid |
| 24 | 6 | 26.4 | 104.3 | very thick white fibrous solid |
| 25 | 6+7 | 25.5 | 100.8 | very thick white fibrous solid |
| 26 | 7 | 25.7 | 101.6 | very thick white fibrous solid |

[a]turned partially yellow after being left in air overnight when wet in acetone (not immediately dried).
[b]polymer precipitated into ice-water rather than room temperature water.
[c]these two samples were likely accidently mixed when collecting the solid, as they were performed side-by-side. Their average yield is 102.8%, which matches the total overall yield.

Procedure for ~50% dm HMT-PMBI

To two separate 1 L, 3-neck round-bottom flasks was each added HMT-PBI (30.00 g, 55.1 mmol), DMSO (800 mL), and potassium hydroxide in water (14.00 g KOH in 35 mL $H_2O$). Each was vigorously stirred and heated at 70 °C for 16 h closed. The viscous dark red/brown mixtures were cooled to room temperature and both were combined by decanting into one 2 L beaker. While manually stirring the mixture with a glass rod, iodomethane (21.0 mL, 337 mmol) was added (exothermic). The dark-colored mixture was stirred for approximately 5 min until the mixture became a chunky, pale brown sludge. The mixture was then poured equally into 4 x 4 L beakers, each containing distilled water (3 L). To each beaker was then added potassium iodide (5.0 g) and briefly stirred with a glass rod. The precipitate was collected by vacuum filtration and washed with water. The collected cakes were transferred to a clean 4 L beaker and the cakes were beaten to a powder using a metal spatula. This wet solid was then stirred for 16 h in acetone (3 L) with potassium iodide (15.0 g). The solid was collected by vacuum filtration and washed with acetone. The yielded cakes were added to a 1 L container and beaten again to a powder. The solid was dried under vacuum at 80 °C for at least 24 h yielding 58.2 g of 53.7% dm HMT-PMBI as a pale brown powder (88.9% yield). $^1H$ NMR (400 MHz, $CD_2Cl_2$, ppm) $\delta$: 8.28-7.45 (m, 6.03H), 7.44-7.09 (m, 6.00H), 4.46-3.87 (m, 0.91H), 3.87-3.39 (m, 5.61H), 2.33-1.97 (m, 11.71H), 1.97-1.70 (m, 7.39H). The amount of iodomethane used, the precipitation solvent, and amount of potassium iodide used was varied in subsequent reactions and the resulting data is shown in **Table 6.** The dm% was calculated using Equation (1), below.

**Table 6.** Yield of ~50% dm HMT-PMBI, reaction scale, amount of iodomethane (MeI) used, and calculated dm% from $^1H$ NMR spectroscopy data for each reaction performed.

| Reaction # | Scale | MeI amount used (mL) | Yield (g) | Yield (%) | dm | Appearance |
|---|---|---|---|---|---|---|
| 1 | 0.83 | 13.8 | 44.0 | 79.3 | 55.6% | pale brown powder[a] |
| 2 | 1.00 | 18.5 | 53.3 | 83.3 | 51.4% | pale brown powder[b] |
| 3 | 1.00 | 20.0 | 52.7 | 79.7 | 54.9% | pale yellow powder[b] |

(continued)

| Reaction # | Scale | MeI amount used (mL) | Yield (g) | Yield (%) | dm | Appearance |
|---|---|---|---|---|---|---|
| 4 | 1.00 | 22.0 | 54.4 | 83.1 | 53.8% | pale yellow powder[c] |
| 5 | 1.00 | 22.0 | 58.6 | 88.2 | 55.3% | pale brown powder |
| 6 | 1.00 | 22.0 | 59.6 | 88.6 | 56.7% | brown powder |
| 7 | 1.00 | 21.0 | 58.2 | 88.9 | 53.7% | pale brown powder |
| 8 | 1.00 | 21.0 | 59.3 | 88.5 | 56.2% | brown powder |
| 9 | 1.00 | 21.0 | 58.7 | 89.1 | 54.5% | pale brown powder |
| 10 | 1.00 | 21.0 | 58.6 | 87.6 | 56.0% | brown powder |
| 11 | 1.00 | 21.0 | 59.1 | 90.2 | 53.9% | pale brown powder |

[a]polymer was precipitated into water and no potassium iodide was used in the purification process.
[b]polymer was precipitated into methanol and no potassium iodide was used in the purification process.
[c]polymer was precipitated into methanol with potassium iodide. No potassium iodide was used in the acetone purification step.

Controlled methylation procedure

To a 1 L round-bottom flask containing dichloromethane (300 mL) was added ~50% dm HMT-PMBI (34.00 g, 51.4% dm) followed by additional dichloromethane (400 mL). The solid was broken up inside with a spatula and the mixture was stirred for 1.5 h until mostly dissolved. Iodomethane (13.0 mL, 209 mmol) was added and the mixture was stirred for 18 h closed at 30°C. The precipitate was broken up with a spatula and the stirring was continued for 3 h at room temperature. The solvent was evaporated at 44 °C by dynamic vacuum, leaving a strong solid film stuck to the inner glass wall. Methanol was added and heated to dissolve the polymer and then transferred to a large, flat glass dish, using additional methanol to rinse all of the contents into the large dish. The solvent was evaporated in air at room temperature and then under vacuum at 100 °C, yielding one thick 45.6 g brown film of 90.2% dm HMT-PMBI (97.2% yield). The $^1$H NMR spectra were taken of washed and dried membranes. $^1$H NMR (400 MHz, DMSO-$d_6$, ppm) $\delta$: 8.97-7.66 (m, 6.15H), 7.66-7.04 (m, 6.00H), 4.30-3.78 (m, 9.57H), 3.78-3.50 (m, 1.16H), 2.44-1.49 (m, 17.88H). For repeated syntheses, the polymer was purified by different methods, such as precipitation into acetone rather than evaporation of dichloromethane. Additionally, if a lower than desired dm% was yielded, such as 86% dm instead of 89% dm, the same procedure could be repeated using DMSO as the solvent and a stoichiometric amount of iodomethane at 30°C for 18 h. The resulting synthetic data is shown in **Table 7.** The dm% was calculated using Equation (1).

**Table 7.** Yield of >55% dm HMT-PMBI, amount of iodomethane (MeI) used, reaction time, and dm% as calculated by $^1$H NMR spectroscopy data for each reaction performed.

| Reaction # | MeI amount used (mL) | Reaction time (h) | Initial dm | Final dm | Yield (g) | Yield (%) |
|---|---|---|---|---|---|---|
| 1[a] | 10.5/0.6 | 16/19 | 55.6% | 89.2% | 31.6 | 70.6 |
| 2[b] | 13.0 | 18 | 53.4% | 89.4% | 37.6 | 82.2 |
| 3 | 13.0 | 21 | 51.4% | 90.2% | 45.6 | 97.2 |
| 4 | 13.0 | 18 | 54.9% | 88.9% | 44.2 | 98.4 |
| 5 | 11.0 | 17 | 54.3% | 86.5% | 43.0 | 96.8 |
| 6 | 9.0 | 17 | 53.8% | 82.8% | 42.7 | 98.4 |

(continued)

| Reaction # | MeI amount used (mL) | Reaction time (h) | Initial dm | Final dm | Yield (g) | Yield (%) |
|---|---|---|---|---|---|---|
| 7[c] | 18.0 | 90 | 55.3% | 97.0% | 47.2 | 99.7 |
| [a]this reaction followed a two-step methylation process. The first methylation was performed in dichloromethane (DCM) for 16 h and the second methylation in DMSO for 19 h. The polymers were collected by precipitation.<br>[b]polymer was collected by precipitation into acetone containing potassium iodide.<br>[c]the initial MeI amount was 13.0 mL but was increased to 18.0 mL after 48 h and continued for a total of 90 h. | | | | | | |

Determination of dm

The degree of methylation (dm) for polymers possessing >55% dm was calculated as previously reported. Specifically, using the baseline corrected (MestReNova, "Full Auto Polynomial Fit") $^1$H NMR spectrum of >55% dm HMT-PMBI (400 MHz, DMSO-$d_6$), the integration region 4.30-3.78 ppm was set to 12.00H and the respective integration for 3.78-3.50 ppm was calculated to be x. The dm% was then calculated using equation (1).

$$\mathrm{dm\%} = 50\left(\frac{1}{1+\frac{x}{6}}\right) + 50 \qquad \text{Equation (1)}$$

Also using equation (1), the dm% for ~50% dm HMT-PMBI was calculated from its $^1$H NMR spectrum (400 MHz, $CD_2Cl_2$), where the integration of 4.46-3.87 ppm was set to 12.00H and the respective integration for 3.87-3.39 ppm was calculated to be x.

Membrane fabrication

HMT-PMBI (89% dm, iodide form, 3.5 g) was dissolved in DMSO (46.67 g) by stirring and gently heating for 12 h. The polymer solution was vacuum filtered through glass fibre at room temperature, cast on a levelled glass plate using a K202 Control Coater casting table and a doctor blade (RK PrintCoat Instruments Ltd) and stored in an oven at 85 °C for at least 12 h. The membrane peeled off the glass plate upon immersion in distilled water. After soaking the membrane in distilled water (2 L) for 24 h, the membrane was dried under vacuum at 80 °C for 24 h.

Water uptake

HMT-PMBI membranes were soaked in corresponding 1 M aqueous MX solutions at room temperature for 48 h (exchanged twice), where MX represents KF, KCl, KBr, KI, $Na_2SO_4$, KOH, $KHCO_3$, $K_2CO_3$, or HCl. The membranes were washed with deionized (DI) water several times and soaked in DI water for another 48 h at room temperature (with three exchanges of water) in order to remove trace salts from the membrane. A fully hydrated (wet) membrane was removed and weighed ($W_w$) immediately after excess water on the surface was removed with tissue paper. The hydrated membrane was dried under vacuum at 40 °C to a constant dry weight ($W_d$). The water uptake ($W_u$) was calculated using equation (2) below.

$$W_u(\%) = \frac{W_w - W_d}{W_d} \times 100 \qquad \text{Equation (2)}$$

Dimensional swelling

The procedure for determining dimensional swelling was analogous to determining water uptake wherein the wet dimensions ($D_w$) and dry dimensions ($D_d$) were measured. The percent directional dimensional swelling ($S_x$, $S_y$, and $S_z$) was calculated by using equation (3)

$$S_{x,y,\text{or } z}(\%) = \frac{D_w - D_d}{D_d} \times 100 \qquad \text{Equation (3)}$$

where $S_x$ represents the dimensional swelling in the x-direction (length-direction). $D_w$ and $D_d$ represent the dimensions of the x-direction of the wet and dry membrane, respectively. $S_y$ and $S_z$ represent the dimensional swelling in the y- and z-directions (width and thickness), respectively, using their respective $D_w$ and $D_d$ values in the y- and z-directions. The percent volume dimensional swelling ($S_v$) was calculated using equation (4)

$$S_v(\%) = \frac{V_w - V_d}{V_d} \times 100 \qquad \text{Equation (4)}$$

where $V_w$ and $V$d represent wet and dry volumes, determined from the products of the x-, y-, and z-dimensions $D_w$ and $D_d$, respectively.

Ionic conductivity

The ionic resistance of membranes in the in-plane direction of a two-point probe was measured using electrochemical impedance spectroscopy (EIS), performed by applying an AC potential over a frequency range $10^{2}$-$10^{7}$ Hz with a Solartron SI 1260 impedance/gain-phase analyzer. Unless otherwise noted, the conductivity was measured for fully hydrated membranes at ambient temperature (~22°C). The membrane resistance (R) was determined from the corresponding ionic resistance calculated from a best fit to a standard Randles circuit of the resulting data. The ionic conductivity ($\sigma$) was calculated by using equation (5)

$$\sigma = \frac{l}{AR} \qquad \text{Equation (5)}$$

where $l$ is the distance between the two electrodes and $A$ is the cross-sectional area of the membrane.

For measuring mixed hydroxide/bicarbonate/carbonate ionic conductivities under controlled temperature and relative humidity (RH) conditions, two membranes were first soaked in argon-degassed 1 M KOH for 48 h. The membranes were then washed with degassed DI water for 24 h. After the surface water was removed with tissue paper, the membrane was mounted on a two-point probe inside a pre-set humidity chamber (Espec SH-241) and left to equilibrate in air for 16 h. At a given humidity, the temperature was increased in 10°C increments, and the membrane equilibrated for 30 min before measuring the resistance. When the humidity was changed, the cell was allowed to equilibrate for 2 h before the first measurement. The average of the two membrane conductivities is reported.

Anion concentration

The anion concentration, $[X^-]$, in HMT-PMBI membranes was calculated using equation (7), wherein IECx- was calculated using equation (8).

$$[X^-] = \frac{\text{IEC}_{X^-} \cdot w_{dry}}{V_{wet}} \qquad \text{Equation (7)}$$

Here, IECx- is the IEC of HMT-PMBI in the $X^-$ form, $W_{dry}$ is the dry weight of the membrane in the $X^-$ form, and $V_{wet}$ is the wet volume in the $X^-$ form. The anion concentration in $OH^-$, $HCO_3^-$, and $CO_3^{2-}$ forms were calculated using the IEC of HMT-PMBI in the $HCO_3^-$ form.

$$\text{IEC}_{X^-} = \frac{4000(\text{dm} - 0.5)}{MR_{100} \cdot 2(\text{dm} - 0.5) + MR_{50}(1 - 2(\text{dm} - 0.5))} \qquad \text{Equation (8)}$$

In equation 8, dm is the degree of methylation (0.89 if dm=89%), $MR_{100}$ is the molar mass of one repeat unit of 100% dm HMT-PMBI (including the two $X^-$ counter ions), and $MR_{50}$ is the molar mass of one repeat unit of 50% dm HMT-PMBI.

Mechanical strength

The membranes were die-cut to a barbell shape using a standard ASTM D638-4 cutter. The mechanical properties of the membranes were measured under ambient conditions on a single column system (Instron 3344 Series) using a crosshead speed of 5 mm $min^{-1}$. The determined tensile strength, Young's moduli, and elongation at break were averaged over three samples. The error reported is the standard deviation. To convert from the as-cast iodide form to the chloride form, the membrane was soaked in 1 M NaCl for 48 h (exchanged twice), soaked in DI (deionized) water for 48 h (with multiple exchanges), and dried at 80 °C under vacuum for 16 h.

Chemical stability

A model compound of the polymer, 2-mesityl-1,3-dimethyl-1*H*-benzimidazolium iodide (BMIM-$I^-$) (83 mg), was dissolved in a 2.0 mL mixture of 10 M $KOH_{aq}$ with 3.0 mL methanol (resulting in a 4 M KOH solution). The mixture was heated to 80 °C for 7 days. After cooling to room temperature, a red solid was collected by filtration, washed with water, and dried under vacuum at 60 °C. The solid was dissolved in DMSO-$d_6$ and analyzed by $^1$H NMR spectroscopy.

Prior to testing the chemical stability of HMT-PMBI in various ionic solutions, the as-cast iodide form was converted to the chloride form by soaking the membrane in 1 M NaCl for 48 h (exchanged twice) and then in DI water for 48 h (multiple fresh exchanges). The membrane was subjected to degradation tests using various conditions in closed HDPE containers. Following the degradation test, the membrane was re-exchanged back to chloride form by soaking in 1 M NaCl for 48 h (exchanged twice) and then in DI water for 48 h (multiple fresh exchanges). The ionic conductivity of this membrane in its wet form was measured and the membrane was dried at 50 °C for 16 h. Membrane pieces were dissolved in DMSO-$d_6$ (25 g $L^{-1}$ concentration) and analyzed by $^1$H NMR spectroscopy. The relative amount of benzimidazolium remaining was calculated from the $^1$H NMR spectral data using equation (9)

$$\text{Remaining (\%)} = \left(\frac{1-\frac{y}{2}}{1-\frac{z}{2}}\right) x\ 100 \qquad \text{Equation (9)}$$

where y represents the integration area between 6.00-4.35 ppm relative to 12.00H for the 9.20-6.30 ppm area for the sample of interest and z represents the integration area between 6.00-4.35 ppm relative to 12.00H in the 9.20-6.30 ppm region for the initial sample.

Assembly of the Catalyst-Coated Membrane

An HMT-PMBI membrane (89% dm) was first exchanged from iodide to chloride form by immersion in 1 M KCl for 7 days followed by soaking in DI water for two days with one fresh exchange of DI water half-way through. The chloride form HMT-PMBI was dissolved in MeOH to form a 10 wt% ionomer dispersion. Separately, a catalyst mixture was prepared by adding water followed by methanol to commercial carbon-supported Pt catalyst (46.4 wt% Pt supported on graphitized C, TKK TEC10E50E). The ionomer dispersion was added drop-wise to the catalyst mixture while the solution was rapidly stirred. This resulting catalyst ink contained 1 wt% solids in solution and a 3:1 (wt/wt) MeOH:$H_2O$ ratio. The solids comprised of 15 wt% HMT-PMBI ($Cl^-$) and 85 wt% Pt/C. 15 wt% HMT-PMBI ($I^-$) catalyst ink was similarly produced from the iodide form. 25 wt% FAA-3 ($Br^-$) catalyst ink was similarly produced using commercial ionomer dispersion (FAA-3, 10 wt% in NMP).

To form the catalyst-coated membrane (CCM), a membrane was fixed to a vacuum table at 120 °C. The HMT-PMBI ($Cl^-$) membrane thickness used for the AEMFC testing was 34 ± 2 μm; for the water electrolysis, it was 43 ± 2 μm. The commercial membrane (FAA-3, $Br^-$) thickness used for the AEMFC testing was 20 μm; for the water electrolysis, it was 50 μm. The prepared catalyst ink was applied using an ultrasonicating spray-coater (Sono-Tek ExactaCoat SC) to create a 5 $cm^2$ electrode area with cathode/anode catalyst loadings of 0.4/0.4 mg Pt $cm^{-2}$ for the AEMFC or 0.5/0.5 mg Pt $cm^{-2}$ for the water electrolyzer. The HMT-PMBI ($C1^-$) CCM was then immersed in 1 M KOH in a sealed container for 7 days and DI water for 24 h in a sealed container. FAA-3 CCMs were non-operational after this process and the FAA-3 CCM was instead immersed in 1 M KOH for 24 h. For comparison, the HMT-PMBI ($I^-$) CCM were exchanged in 1 M KOH for 24 h. Gas-diffusion layers (GDL, Sigracet 24BC) were applied to the electrodes and gasketing of a specific thickness was chosen to achieve a 20-30% GDL compression. The resultant assembly was torqued to 2.26 N m. Alignment and adequate compressions were confirmed by using a pressure-sensitive film (Fujifilm Prescale LLLW). For water electrolysis, CCMs were mounted in a fuel cell hardware modified for alkaline electrolyte stability, which included Ti flow fields. CCMs were laminated, and a 50 μm thick Ti screen (60% open area) was applied to the electrodes, with gasketing that was sufficient to provide a zero gap between the flow field, Ti screen, and the electrode. CCMs were

mounted directly *in situ.*

AEMFC operation

The resultant HMT-PMBI ($Cl^-$) AEMFC was conditioned at 100 $kPa_{abs}$ and 60 °C under 100% RH and $H_2/O_2$ and subsequently operated at 300 kPaabs. The potential and resistances measured stabilized for current densities >100 mA $cm^{-2}$ after 8h operation. The CCM was conditioned by running multiple, slow polarization sweeps. The current was increased stepwise from open circuit voltage (OCV) at a rate of 10 mA $cm^{-2}$ per 5 min up to a 0.15 V cut-off. Over the operation time of the AEMFC, multiple sets of polarization data were taken at 5 min $pt^{-1}$ from OCV at 5 or 10 mA $cm^{-2}$ intervals to a 0.2 V cut-off, with additional 1 min $pt^{-1}$ steps at 2 mA $cm^{-2}$ intervals between 0-20 mA $cm^{-2}$ in order to resolve the kinetic polarization region. Multiple fuel cells were constructed and tested under different conditions. In the fuel cell test presented here, the fuel cell was subjected to a 5-day shutdown after 60 h of operation, and then restarted for an additional 10 h (see FIGURE 9). At 70 h of total operation, $CO_2$-containing air was used as the gas feed for 21 h (70-91 h time period) rather than pure $O_2$ in order to examine fuel cell operation using ambient air, before returning the gas feedback to pure $O_2$. During the following 109-114 h operational time using pure oxygen, the temperature was increased to 70 °C for 1 h and then increased in 5 °C intervals to 90 °C. The same conditioning procedures and conditions were used for FAA-3 membranes and HMT-PMBI ($I^-$) membranes for comparison. For operation using 100 kPaabs, polarization data was taken at 5 s $pt^{-1}$. A diagram of the experimental setup is shown in FIGURE 2.

Water electrolyzer operation

The water electrolyzer used a 1 M KOH circulating electrolyte flow heated to 60°C, separately supplied to the anode and cathode at a rate of 0.25 mL $min^{-1}$. A diagram of the experimental setup is illustrated in FIGURE 3. The electrolyte was circulated for 1 h prior to electrolysis to ensure the polymer within the CCM was converted to the hydroxide form. 20 mA $cm^{-2}$ was drawn from the FAA-3 based cell and 25 mA $cm^{-2}$ was drawn from the HMT-PMBI based cell, using a Solartron SI 1260. The experiment was terminated for FAA-3 cells when the applied potential reached 3 V or fell below 1.2 V, corresponding to two different modes of cell failure, as reported in literature. The hydrogen evolution reaction (HER) and oxygen evolution reaction (OER) current density attributable to the Ti screens was measured *ex situ* in 1 M KOH potentiodynamically, and accounted for <0.1 mA $cm^{-2}$ in this potential range. Rates of hydrogen and oxygen gas evolution were also observed by inspection.

Results

The scaled-up synthesis of HMT-PMBI was performed on multiple smaller scale setups, in either a 5 L reactor or a 1 L round-bottom flask. The average yields and standard deviations for multiple syntheses are shown in **Scheme 1.** The quantities shown are the total used (u) or the yield obtained (y).

**Scheme 1**. Scaled-up synthetic route to HMT-PMBI ($I^-$), showing the average yield and standard deviation for multiple batches of each reaction. The amounts of reagents and products shown represent the total amount used over the multiple syntheses performed. The last step shows the yield after optimization.

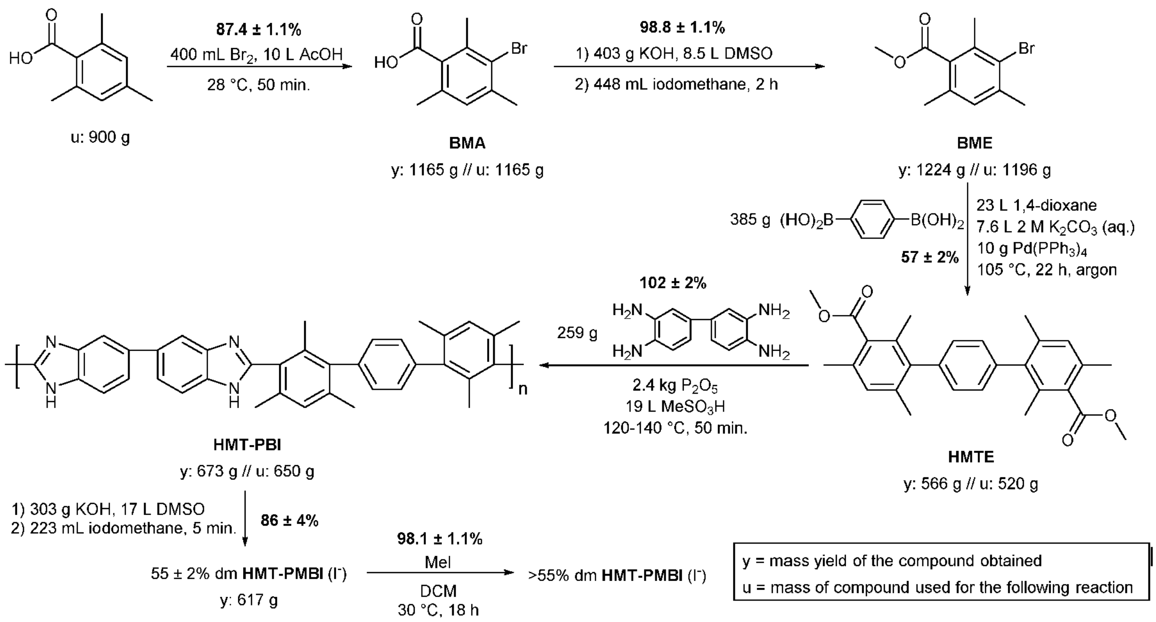


The synthetic route used mesitoic acid (900 g, 5.5 moles) which was readily brominated to yield BMA in high yield (87.4 $\pm$ 1.1%, 4 runs, 5 L scale). This yield was significantly higher than the original reported 60% yield and previously reported yield of 74%. The yield was found to increase when excess bromine was used rather than a stoichiometric amount, as dibromination was not observed to be significant at 25 °C. The second step involved methylation of BMA to BME, which was achieved in near-quantitative yield (98.8 $\pm$ 1.1%, 11 runs, 1 L scale).

The third step involved Suzuki coupling of BME with 1,4-phenylenediboronic acid to form monomer HMTE, which was reproduced in 57 $\pm$ 2% yield (8 runs, 5 L scale). The amount of catalyst, $Pd(PPh_3)_4$, was varied in each run, initially starting with 0.54% mol catalyst per BME. The amount of catalyst was decreased to as low as to 0.08% mol catalyst per BME without any reduction in yield. High purity HMTE was obtained from every batch, as judged by their indistinguishable $^1H$ NMR spectra.

In contrast to the originally reported synthesis of HMT-PMBI, where monomer HMTE was hydrolyzed to its diacid form and then polymerized, polymer HMT-PBI was obtained directly from monomer HMTE. The original hydrolysis route involved dissolving HMTE in concentrated sulfuric acid and precipitating into water. However, as the polymerization to HMT-PBI involves Eaton's reagent (7.7 wt% $P_2O_5$ in methanesulfonic acid), the hydrolysis was found to occur *in situ*, thus eliminating the need for a specific hydrolysis step, and reducing the polymer synthesis by one step. The monomer, DAB, which was purchased from more than one company and having different purities, was recrystallized prior to every polymerization in order to ensure uniform DAB purities and thus reproducible polymers (**Table 4**).

HMT-PBI was produced with a theoretical yield of 102 $\pm$ 2% (26 runs, 1 L scale). The over-estimated yield is most likely due to residual acid present in the polymer fibers. While there were small differences in color and thickness of the precipitated polymer fibers from batch to batch (**Table 5**), the $^1H$ NMR spectra show there are no visible differences in the expected resonances. Due to the negligible variability of each batch, batches were combined, blended, and ground into a saw-dust-like powder using a 700 W blender and mixed together in a 12 L vessel.

The following partial methylation procedure of HMT-PBI to ~50% dm HMT-PMBI was varied throughout the repeated syntheses in order to optimize the yield and decrease the purification time. For example, the average yield of batches 1-4 and 5-11 were 81 $\pm$ 2% and 88.7 $\pm$ 0.5%, respectively (see **Table 6**). This significant increase in yield was due to the addition of potassium iodide in the purification of the polymer in batches 5-11. For example, when the polymer was precipitated from DMSO into water, its amphiphilic nature caused it to partially dissolve, due to its over-methylation of 55 $\pm$ 2% dm. The addition of potassium iodide prevents the polymer from dissolving without potentially exchanging the counter-ion, for example, to chloride, if sodium chloride was used instead. This lowers the time needed to filter the polymer for batches 5-11, which also possessed significantly less solvent impurities than the initial batches, and is likely due to the ability to better wash the filtered polymers. An unassigned peak in all of the $^1H$ NMR spectra of~50% dm HMT-PMBI (400 MHz, $CD_2Cl_2$) polymers was observed at 0.13 ppm, which may be due to methylated silicates arising from the hot KOH-DMSO solution that etches the glass walls of the reactors. This suggests that non-glass reaction vessels would perform better for repeated large scale batches.

The final synthetic step was the controlled methylation of~50% dm to >55% dm HMT-PMBI in dichloromethane, which was achieved in near-quantitative yield (98.1 $\pm$ 1.1%) over a range of dm%. The original procedure involved the precipitation of the ionene from the dichloromethane solution into acetone, but this procedure led to a 20-30% loss in

yield. Instead, evaporation of the dichloromethane resulted in nearly quantitative yield for all degrees of methylation. While a number of polymer batches of >55% dm HMT-PMBI were prepared in order to show the extent of control and reproducibility, only those polymers with 89% dm were subjected to characterization and stability tests. The choice of 89% dm can provide membranes with balanced ionic conductivity, water uptake, and mechanical strength.

The overall synthetic yield, based on the starting mesitoic acid to >55% dm HMT-PMBI was 42 ± 3%, which is high for a six-step synthesis. Each step showed high reproducibility in terms of yield, as well as purity. The synthesis of 617 g of 55 ± 2% dm HMT-PMBI, which corresponds to 1.03 mol repeat units, demonstrates the versatile scale up of this synthetic route.

Hydroxide ion conductivity

The as-cast 89% dm HMT-PMBI ($I^-$) membrane was converted to hydroxide form by immersion into 1 M KOH for 48 h, followed by washing with argon-degassed water several times. By immediately monitoring, the ionic conductivity of the wet membrane was measured by electrochemical impedance spectroscopy (EIS) in air (FIGURES 5A and 5B). The initial conductivity of 23 mS $cm^{-1}$ decreased rapidly upon exposure to air and leveled off at 8.1 mS $cm^{-1}$ after ~40 min, as shown in FIGURE 5B. This effect is attributed to rapid conversion of hydroxide to a mixed hydroxide/bicarbonate/carbonate form upon exposure to $CO_2$ in the atmosphere.

Accordingly, after 16 h equilibration in air, the mixed carbonate conductivity was measured at various temperatures and relative humidity (RH), which followed Arrhenius-type behavior, as shown in FIGURE 6A. The highest conductivity was measured at 95% RH and 90 °C to be 17.3 mS $cm^{-1}$. The activation energies ($E_a$) were calculated at each humidity level using $E_a = -mR$, where $m$ represents the slope of the linear regression for ln $\sigma$ vs. $1000/T$ and $R$ represents the universal gas constant (8.314 J $mol^{-1}$ $K^{-1}$). Between 70-95% RH, $E_a$ was calculated to be 25-26 kJ $mol^{-1}$, which is typical for bicarbonate AEMs. However, as the RH was decreased below 60%, the activation energy linearly increased, as shown in FIGURE 6B, possibly due to the loss of accessible cationic sites that are immobilized in the backbone. This suggests that an RH of at least 60% is required to hydrate the polymer for unhindered bicarbonate conduction.

Physical properties of HMT-PMBI incorporating various anions

The water uptake ($W_u$), volume dimensional swelling ($S_v$), and directional swelling ($S_x$, $S_y$, and $S_z$) were measured for 89% dm HMT-PMBI after soaking for 48 h in various 1 M ionic solutions, to exchange the anion, and washed with water for 48 h. The resulting water uptake and swelling are shown in FIGURE 7A and 7B. FIGURE 7A illustrates a proportional relationship between dimensional swelling and water uptake for the monovalent anions, with the exception of the fluoride ion form. Dimensional swelling increased in the order of $I^- < Br^- < F^- < Cl^- < OH^-$. This unusual behavior of the fluoride form is more clearly observed in plots of directional swelling (FIGURE 7B), where KF results in significant anisotropic swelling. The fluoride form swells by almost three times more in each in-plane direction compared to the out-of-plane ($S_z$) whereas the other halogens exhibit minor increases in thickness relative to in-plane swelling. The relative decrease in swelling in the thickness direction of the fluoride ion form is similar to that of the bivalent anions ($CO_3^{2-}$ and $SO_4^{2-}$), which have the ability to ionically-crosslink the polymer. The observed anisotropic dimensional swelling of the fluoride ion form may be due to the anisotropic orientation of the polymers, i.e., aligning parallel to the in-plane direction, due to the slow evaporation process during casting, but this would require further study for validation.

The conductivity of wet membranes of each ion form is shown in **Table 8.** The highest conductivity was observed for membranes ion-exchanged using KOH solution; exchange with KCl produced a membrane with the second highest conductivity. The conductivity differences between KOH, $KHCO_3$, and $K_2CO_3$ were larger than expected, as each ion is known to equilibrate to a similar mixed carbonate form in air. A possible reason is due to the mechanical changes that occur due to different swelling behavior in the various ionic solutions, as previously shown in FIGURES 7A and 7B.

The differences in conductivity of membranes containing different anions does not correlate to the corresponding diffusivity coefficient of the anion at infinite dilution, $D$, listed in **Table 8.** For example, the diffusivity coefficient at infinite dilution is similar for $Cl^-$, $Br^-$, and $I^-$, but the conductivity decreases in the order of $Cl^- > Br^- > I^-$. This trend is likely due to differences in water uptake and differences in dimensional swelling of the membranes, the effect of an anion possessing different dissolution enthalpies, and the fact that the anions are far from being at infinite dilution - the anion concentration in the membrane is in the order of 1.5-2 M (**Table 8**). This brings into question the validity of using D values to estimate hydroxide conductivities based on mixed carbonate forms (ratio of 3.8) or chloride forms of the polymer, which have been previously used in the literature to draw comparisons between anions.

**Table 8.** Diffusion coefficients at infinite dilution of anions and the respective anion conductivity and anion concentration of HMT-PMBI.

| Solution | anion *D* (x$10^5$ $cm^2$ $s^{-1}$)[a] | $\sigma X^-$ (mS/cm)[b] | [$X^-$] (M)[c] |
|---|---|---|---|
| KF | 1.48 | 6.2 ± 0.2 | 1.86 ± 0.10 |
| KCl | 2.03 | 7.5 ± 0.4 | 1.7 ± 0.2 |
| KBr | 2.08 | 4.2 ± 0.6 | 1.89 ± 0.09 |
| KI | 2.05 | 0.87 ± 0.01 | 2.04 ± 0.07 |
| KOH | 5.27 | 10.0± 1.2 | 1.51 ± 0.07 |
| $KHCO_3$ | 1.19 | 3.8 ± 0.4 | 1.57 ± 0.09 |
| $K_2CO_3$ | 0.92 | 2.0 ± 0.2 | 1.69 ± 0.12 |

[a]Literature data for diffusion coefficients (*D*) of anions in aqueous solution at 25 °C. [b]Anion conductivity ($\sigma$) of 89% dm HMT-PMBI membranes after anion exchange in 1 M solutions at room temperature. [c]Anion concentration in HMT-PMBI at room temperature.

The ability of the hydroxide ion to convert to the mixed carbonate form makes the measurement of the hydroxide conductivity form unreliable. As a result, measurements pertaining to degradation tests and mechanical properties of HMT-PMBI after exposure to different aggressive conditions, were reconverted to the chloride form, as the chloride form exhibits the next closest properties to the hydroxide ion form, yet is stable in air.

Mechanical strength

Tensile strength, elongation at break, and the Young's modulus were measured for 89% dm HMT-PMBI membranes using either the as-cast iodide form or the chloride-exchanged membrane (FIGURE 4). Three measurements were performed on each form and their properties are tabulated in **Table 9.** The tensile strength of the as-cast HMT-PMBI membrane ($I^-$, dry) was measured to be 64.7 ± 0.3 MPa, equivalent to the high performance polymer, *m*-PBI, which has a similar backbone. However, the elongation of 89% dm HMT-PMBI (97 ± 13%) is higher than *m*-PBI by two orders of magnitude, and its Young's modulus is lower. From these data, HMT-PMBI is viewed as being exceptionally strong and flexible for an ionic solid polymer electrolyte. The tensile strength of the dry polymer decreased when the iodide was exchange for chloride form, and furthermore decreased when in a wet state, which is attributed to the increased water uptake and dimensional swelling of the chloride forms, as previously shown. Nevertheless, the wet chloride form possessed a significantly higher tensile strength, a lower elongation at break, and a similar Young's modulus to that of a commercial ion-exchange membrane, Nafion 212, illustrating that HMT-PMBI exhibits robust mechanical properties, potentially suitable for fuel cell or water electrolyzer applications.

**Table 9.** Mechanical properties of HMT-PMBI membranes compared to that of Nafion 212 and *m*-PBI

| Mechanical Property[d] | Nafion 212 (dry) | Nafion 212 (wet) | *m*-PBI (dry) | HMT-PMBI ($I^-$, as-cast) | HMT-PMBI ($Cl^-$, dry) | HMT-PMBI ($Cl^-$, wet) |
|---|---|---|---|---|---|---|
| Tensile Strength (MPa) | 23.9[a] | 19.4[a] | 65[b] | 64.7 ± 0.3 | 50 ± 2 | 33 ± 3 |
| Elongation at break (%) | 136[a] | 119[a] | 2[b] | 97 ± 13 | 76 ± 10 | 63 ± 5 |
| Young's Modulus (MPa) | 270[a] | 200[a] | (5900)[c] | 1070± 160 | 940 ± 40 | 230 ± 30 |

[a]Literature data for a membrane. [b]Literature data for a membrane. [c]Literature data for a fibre. [d]Mechanical properties for HMT-PMBI membranes (89% dm) were measured three times and the standard deviations are shown. The chloride form was produced by exchanging the as-cast iodide membranes in 1 M NaCl.

*Ex situ* stability to hydroxide ions

The model compound, 2-mesityl-1,3-dimethyl-1H-benzimidazolium (MBIM) (**Scheme 2**), was subjected to 4 M $KOH/CH_3OH/H_2O$ at 80°C for 7 days in order to observe the $^1H$ NMR spectrum of the degradation product without the complicated side-products from deuterium exchange. The precipitated, dark red-colored degradation product was collected and analyzed by $^1H$ NMR spectroscopy. The main degradation pathways reported in literature are nucleophilic displacement (**Scheme 2,** arrow a) and ring-opening degradation (**Scheme 2,** arrow b) followed by hydrolysis (**Scheme 2,** arrow c). It has been recently shown that MBIM degrades only by ring-opening when in 3 M $NaOD/CD_3OD/D_2O$ at 80 °C, which agrees well with the spectrum of the degraded product. There appears to be more than one isomer, which results in multiple peaks within a given area. For example, the N-H peaks appear between 5.4-4.4 ppm but only one quartet peak was expected. Two quartets are instead observed, suggesting that conjugation through the amide bond locks rotation on the NMR time scale, observing *trans*- and *cis*-like compounds simultaneously. The conjugation is also the likely reason for the dark red color of this product.

**Scheme 2.** Possible degradation pathways for the model compound in hydroxide solution: (arrow a) nucleophilic displacement, (arrow b) ring-opening/C2-hydroxide attack, followed by (arrow c) hydrolysis of the amide

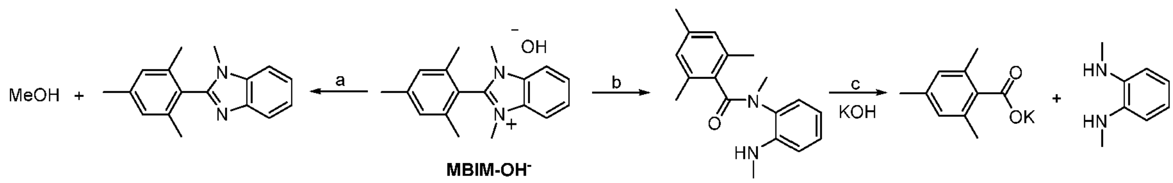


The hydroxide stability of 89% dm HMT-PMBI was examined under high temperature and high pH conditions in order to determine the upper limit of stability. Membranes were first examined for stability in 2 M KOH at 20, 40, 60, and 80 °C for 7 days. The anion conductivity, as shown in FIGURE 8A, was stable up to 40 °C but decreased at 60 °C by 9% and at 80°C by 19%. To determine if the resulting loss in conductivity was due to chemical degradation, the $^1H$ NMR spectra of each sample was collected. For the spectra of membranes exposed to 2 M KOH at 60 °C and lower, no chemical change was observed. This agrees with a previous literature report wherein HMT-PMBI was subjected to a 2 M KOH, 60 °C test in methanol, and where no degradation was observed after 8 days. The 9% decrease in conductivity is therefore attributed to a morphological change in the membrane, similar to a conditioning process, and no chemical degradation.

Exposure of the membrane to 2 M KOH at 80 °C for 7 days revealed minor changes in the $^1H$ NMR spectrum of HMT-PMBI, i.e., at 7.2, 5.5-4.6, 3.2-2.6, and 2.4 ppm. Similar to the degradation of MBIM, the peaks shift up-field to similar positions as those for the degraded model compound. In particular, two small peaks emerge in the 5.5-4.6 ppm region, representative of the characteristic N-H group formed by ring-opening degradation. By comparing the integration of the 6.00-4.35 ppm region relative to 12.00H corresponding to the aromatic region, the extent of chemical degradation was quantified using equation (9). In the event that 100% ring opening degradation of the polymer occurred, the 6.00-4.35 ppm should integrate to 2.00H. As such, the remaining quantity of benzimidazolium relative to the initial spectrum can be plotted, as shown in FIGURE 8B.

The relative amount of benzimidazolium remaining is unchanged for the 60 °C test, which quantitatively verifies that there is no chemical degradation within this 7 day time period. At 80 °C, the amount of benzimidazolium remaining decreases from 100% to 94%. While this 6% degradation may be approach the numeric uncertainty in this method, it appears to be consistent with the qualitative changes observed in the NMR spectra. However, it is unclear whether the 19% decrease in conductivity is solely related to the minor chemical degradation or if it is a combination of chemical degradation and conditioning.

In a modified degradation study, 89% dm HMT-PMBI was immersed in solutions of increasing NaOH concentration at 80°C for 7 days. The resulting measured conductivities, after reconverting to the chloride form, as well as the percent benzimidazolium remaining (calculated based on $^1H$ NMR spectra) are shown in FIGURE 8C and FIGURE 8D, respectively. The conductivity of the membranes exposed to 0.5 M and 1.0 M NaOH at 80 °C did not significantly change over the 7 day period, demonstrating its stability against hydroxide ion attack. However, immersion into solutions above 1 M NaOH results in a decrease in conductivity. $^1H$ NMR analyses indicated significant degradation is observable (FIGURE 8D), where the amount of remaining benzimidazolium reaches a plateau of 40% for the 5.0 and 6.0 M NaOH

treatments. This may due to the inability of hydroxide to permeate any further into the increasingly hydrophobic membrane which is induced after degradation. Similar to the prior degradation experiment, 94% benzimidazolium remained for the 2 M NaOH treatment, suggesting that there is no significant difference between 2 M NaOH and 2 M KOH degradation tests at 80 °C for 7 days.

Over the 7 days at 80 °C, all membranes subjected to NaOH solutions (0.5 M to 6.0 M) remained intact and flexible. However, the initially yellow-colored membrane became darker in color commensurate with the NaOH concentration. The retention of the physical properties of the membrane suggests ring-opening degradation does not result in extensive backbone cleavage, which would occur if amide hydrolysis continued, as is observed with methylated m-PBI. It can be presumed that the degradation is retarded after ring-opening degradation. The red-shifted color, as was observed with the fully ring-opened model compound, appears to follow the same trend as the percent of remaining benzimidazolium (FIGURE 8D), suggesting that this ring-opening degradation is the major, and possibly only, degradation pathway occurring.

When the membrane was subjected to 6 M NaOH at room temperature for 7 days, no chemical degradation was apparent. By using equation 9, the amount of benzimidazolium remaining was calculated to be 98%, which quantitatively implies no significant degradation. Similar to the previously mentioned conditioned process, the membrane that was treated in 6 M NaOH had an increased anionic conductivity from 10.1 $\pm$ 0.4 mS $cm^{-1}$ initially to 12.0 $\pm$ 0.4 mS $cm^{-1}$. This suggests that the material is highly stable in 6 M NaOH at room temperature, representative of exceptional *ex situ* stability.

<u>*In situ* fuel cell operation</u>

The 89% dm HMT-PMBI was used as both the membrane and catalyst layer ionomer for fuel cell analysis. The initial iodide form was first exchanged to the chloride form, as chloride has been shown to have a negligible effect on electrocatalysis in alkaline electrolytes. A rigorous pre-conditioning was invoked to ensure accurate data for long-term stability tests, involving immersion of the chloride form CCM in 1 M KOH for 7 days followed by 7 days in water. Long-term immersion of the hydroxide-form AEMFCs in water removes impurity ions from the catalyst layers, thus improving electrocatalysis and preventing *in situ* degradation from precipitate formation, potentially leading to improved long-term stability. Few standard practices exist in the characterization of AEMFC membranes and ionomers, and 'best practices' are only just beginning to be developed. However, it is possible that beginning-of-life polarization data may only represent polarization data achieved when the membrane/ionomer is in an effectively KOH-doped state. As such long-term polarization steps were chosen (5 min $pt^{-1}$), which is a standard procedure for the *in situ* characterization of proton-exchange membrane and ionomer materials. Additionally, this ensures equilibrium is reached in terms of water management, which is a more complex process in AEMFCs than for PEFCs.

The AEMFC for which data are presented (FIGURE 2) was conditioned at low potentials, reaching full conditioning, i.e., near-peak power densities, within 8 h. AEMFCs functioned stably at all potentials over dozens of slow polarization curves at 60 °C for over 100 h, as shown in FIGURE 9. A cold restart (i.e., shutdown, cool-down, and re-equilibration to full function) was performed, including a 5-day period of non-function at the 60 h mark, which the hours are not included in the following reported lifetime. After full re-equilibration, the cell was operated for 21 h with $CO_2$-containing air (at 70-91 h). After returning the gas back to $O_2$, full re-equilibration was quickly achieved, as observed from the polarization data (FIGURE 10A). Representative polarization data are given after conditioning, cold restart, and re-equilibration with air. At 0, 51, and 94 h, the maximum power densities ($P_{max}$) measured from FIGURE 10B are 47.7, 48.9, 49.2 mW $cm^{-2}$, respectively, which signifies an improvement over time and is surprising for an AEMFC operating at 60 °C under challenging conditions. Additionally, the absence of hysteresis in this AEMFC from the cold restart and its operation in $CO_2$-containing air is without published precedent. The long-term improvements to power density and the stable polarization data strongly suggest HMT-PMBI membranes and ionomers are especially stable under these operation conditions.

After operating the fuel cell at 60 °C for 109 h, the temperature was increased up to 90 °C and polarization data were recorded. For 5 °C temperature increments from 70-90 °C, $P_{max}$ values were 54.5, 55.9, 57.4, 64.4, and 62.5 mW $cm^{-2}$, respectively (FIGURE 10C). The reduction in peak power density between the 85 °C and 90 °C data is attributed to early- onset mass transport losses. The overall peak power density increased 31% between 60 and 85 °C, with significant improvements in the kinetic-region for polarization data between 70 and 85 °C. Improvements in the high-temperature operation were consistent over multiple fuel cell tests, which is noteworthy for membrane-based alkaline AEMFCs.

To compare an HMT-PMBI-based fuel cell with that of a commercial-type AEMFC, CCMs were prepared using a FuMA-Tech FAA-3 membranes and ionomer. When the cell containing this commercial membrane and ionomer was subjected to the same pre-conditioning as HMT-PMBI (1 M KOH for 7 days followed by 24 h in water), the AEMFC based on commercial materials was non-operational due to degradation. However, if the commercial fuel cell was first conditioned using a 1 M KOH soak for 24 h and used without a water wash, the cell was fully operational, reaching a $P_{max}$ of

430 mW $cm^{-2}$ after 45 min conditioning, as shown in FIGURE 11. HMT-PMBI fuel cells, conditioned by soaking in 1 M KOH for 7 days and 24 h in water, yielded a similar $P_{max}$, 370 mW $cm^{-2}$. The cells containing the commercial membrane and ionomer could not be subjected to the shutdown, restart, exposure to $CO_2$-containing air, nor higher temperature without rapid degradation.

*In situ* water electrolysis operation

The water electrolyzer setup involved using 1 M KOH as liquid electrolyte at 60 °C, which is considered a rigorous test of alkaline stability. Furthermore, the use of dual syringe pumps and atmospheric pressure in the experimental setup (FIGURE 3) resulted in constantly switching differential pressure on the membrane as well as significant bubble formation, which causes additional stresses on the membrane. In commercial electrolyzers, these issues are usually addressed by operating with *shock-free* electrolyte flows and at high pressures, as high as 200 bar. As a result, this experimental setup also serves as an accelerated mechanical stress test under alkaline conditions. *In situ* lifetimes therefore represent a rigorous measure of mechanical and chemical durability. The measured voltages over time for the commercial (FAA-3) and HMT-PMBI based water electrolyzer cells are shown in FIGURE 12.

Under these conditions, in the example used to demonstrate the stability of HMT-PDMBI cells, the cell based on commercial materials became inoperable after 9.5 h at 20 mA $cm^{-2}$. During the 9.5 h, the average potential was 2.16 $\pm$ 0.04 V. End-of-life was represented by the absence of gas evolution and a substantial drop in potential (below 1.23 V), which is believed to result from membrane degradation and electrical shorting. The relatively short lifetime of the commercial material under these conditions was reproducible, and repeated on individual cells, 11 times. The average operational time of three cells prepared using FAA-3 membranes was 16.2 h.

In contrast, water electrolyzers fabricated from HMT-PMBI were be operable at 25 mA $cm^{-2}$ for >144 h, with an overall applied potential of 2.4 $\pm$ 0.1 V (this voltage is a typical applied potential for AEM electrolysis). HMT-PMBI cells demonstrated improving performance compared to the commercial cell. Operation of the cell was stopped after 144 h for evaluation, during which electrolyte flows and temperature were maintained. In the example shown, the cell was stopped for 50 h before restarting, and electrolysis continued for an additional 51 h at a potential 2.4 $\pm$ 0.1 V, whereupon the still-operational cell was shut down. The total time in situ was 245 h, representing a minimum of >20 times longevity versus a benchmark commercial membrane. The observed re-conditioning between the two periods of operation suggests that the catalyst was subject to poisoning from feed water impurities rather than material degradation, as trace impurities have been shown to strongly affect the HER.

The feasibility of scaled-up preparation of HMT-PMBI was demonstrated through the synthesis of 617 g of high purity polymer in 42 $\pm$ 3% overall yield. Each step was synthetically improved and shown to be highly reproducible; a synthetic step was eliminated. The HMT-PMBI dimethylated to 89% and cast as membranes were exceptionally strong and flexible when dry, as demonstrated through the measured tensile strength, elongation at break, and Young's modulus. In their fully hydrated chloride form, the mechanical properties were superior to commercial Nafion 212 membrane, which is remarkable in the context of AEMs given that membranes were cast from solvents and contained no additives or subjected to cross-linking. A wide range of properties, including dimensional swelling, water uptake, and conductivity for various ion forms is presented. The activation energy for the ionic conductivity of HMT-PMBI in mixed hydroxide/bicarbonate form in air was constant above 60% RH but increased when the RH was reduced to <60% RH.

*Ex situ* stability tests demonstrated the exceptional stability of HMT-PMBI under various hydroxide concentrations and temperatures; for example, no significant degradation in 1 M NaOH at 80 °C or 6 M NaOH at room temperature was observed after 168 h. HMT-PMBI was examined for *in situ* stability as the membrane and ionomer in an AEMFC and water electrolyzer. For the AEMFC at 60 °C, the polymer demonstrated >100 h of operation at various current densities, which improved during operation, despite modulating the cathode feed between pure $O_2$ and $CO_2$-containing air and the first reported fully-restored restart of an AEMFC. AEMFCs based on the material achieved high power densities of 370 mW $cm^{-2}$, comparable to commercial AEMFCs. However, HMT-PMBI cells demonstrated increased material stability, resulting in substantially more stable operation and longer lifetimes. For example, in water electrolyzers, an HMT-PMBI-based cell, using 1 M KOH electrolyte at 60 °C, was operated for 195 h without any drop in performance, whereas comparable cells based on the commercial materials became inoperable after only 16 h.

Collectively, the *in situ* and *ex situ* stability of HMT-PMBI, together with its ease of synthesis, mechanical properties, solubility in selective solvents, and insolubility in water make it a benchmark alkaline anion-exchange membrane and ionomer, providing motivation to further study in a wide range of energy applications, e.g., redox flow and metal-air batteries. Additionally, access to a versatile and useable hydroxide-conducting polymer will facilitate further research into AEMFCs and water electrolyzers, including the investigation of novel catalysts, effects of $CO_2$, and impact of free radical formation on the lifetime of AEMFCs and electrolyzers.

Example 2. Tri-doped reduced graphene oxide as a metal-free catalyst for polymer electrolyte fuel cells

Polymer electrolyte fuel cells (PEFCs) based on hydrogen oxidation and oxygen reduction are considered a promising technology for emission-free energy conversion. Metal-free heteroatom-doped carbon materials, such as doped graphene and carbon nanotubes (CNTs) or mesoporous carbons, which have with a two dimensional structure, high electron mobility, and large specific surface area, can be used as oxygen reduction reaction (ORR) catalysts. For example, reduced graphene oxide (rGO) can be co-doped with nitrogen and fluorine, resulting in a higher catalytic activity when compared to the respective individually N- and F-doped materials. Without wishing to be bound by theory, it is believed that a combination of dopants can provide a relatively larger number of active sites when compared to individually doped graphene-based materials.

Tri-doped reduced graphene oxide with F, N and S as doping species was synthesized, with the expectation that it will exhibit an even higher catalytic activity. F- and N-doping leads to charge polarization via C-F and C-N bonds, and S-doping creates unpaired electrons at the defect sites in the vicinity of C-S bonds, generating both types of active sites. The F, N and S tri-doped reduced graphene oxide (F,N,S-rGO) was synthesized by annealing a composite of sulfur-doped reduced graphene oxide (S-rGO), Nafion and dimethyl formamide (DMF) under $N_2$ atmosphere at 600 °C. Nafion and DMF serve as F and N sources, respectively. The novel tri-doped rGO was characterized by energy-dispersive X-ray spectroscopy (EDX), Fourier transform infrared spectroscopy (FT-IR), and X-ray photoelectron spectroscopy (XPS). The results show that S-rGO is fluorinated by $F^\bullet$ radicals or F-containing radicals, as well as $N^\bullet$ radicals, generated by the pyrolysis of Nafion and DMF, respectively. The catalytic activity towards the ORR of F,N,S-rGO was characterized by rotating disk electrode measurements (RDE) and by its incorporation into AEMFCs as cathode catalyst layers. Maximum power densities of 46 mW/cm$^2$ were obtained for AEMFCs including HMT-PMBI, at a cell temperature of 85°C, using oxygen and hydrogen fuels under 300 kPa absolute pressure and a temperature of 83 °C. The F,N,S-rGO ORR catalyst is cost-effective and exhibits high stability under fuel cell operating conditions.

Material characterizations

rGO was first sulfur-doped, then used as precursor for the synthesis of F,N,S-rGO. Graphene oxide (GO) was refluxed with phosphorus pentasulfide ($P_4S_{10}$) whereupon oxygen atoms within GO were partially replaced by sulfur and simultaneously reduced to form S-rGO. S-rGO also contains thiol groups, which enables it to be soluble in various solvents, facilitating the next steps of the synthesis. To remove metal impurities existing in the samples, GO (obtained via Hummer's method) was extensively purified. EPR measurements confirmed that manganese, the only metal involved in this synthesis, had been completely removed after refluxing. For the synthesis of F,N,S-rGO, DMF containing S-rGO and Nafion were dispersed in dimethyl formamide (DMF) under ultrasonication to yield a homogeneous dispersion. After evaporation of solvents by heating at 100 °C, a composite of S-rGO-Nafion-DMF was obtained. Subsequently, the S-rGO-Nafion-DMF composite was annealed at 600 °C under $N_2$ to provide F,N, S-rGO powder.

The morphology of the F,N,S-rGO powder provides a high surface area (BET model) of 575 m$^2$/g, which facilitates the oxygen diffusion to the active centers when used as cathode catalyst in a AEMFCs. EDX elemental mappings of the material at different magnifications demonstrate a homogeneous distribution of F-, N-, and S-doping across the graphene sheets. According to the XPS data, the atomic concentrations of doping elements are 1.19, 2.01, and 1.06 at% for fluorine, nitrogen, and sulfur,

Electrochemical characterizations

Electrochemical investigation for ORR catalysis of F,N,S-rGO was performed in both 0.1M $HClO_4$ and 0.1M NaOH. While no reduction peak is observed under $N_2$ saturation, the cyclic voltammetry (CV) of F,N,S-rGO in 0.1M NaOH at a scan rate of 20 mV/s shows the typical $O_2$ reduction peaks at ~ 0.75 V vs RHE under $O_2$-saturation, thus demonstrating the ORR catalytic activity of F,N,S-rGO. Linear sweep voltammetry (LSV) curves of F,N,S-rGO, S-rGO, GO, glassy carbon, and benchmark Pt/C in $O_2$-saturated 0.1M NaOH at electrode rotating speed of 1600 rpm reveal an increase of catalytic activity from GO to S-rGO to F,N,S-rGO, as demonstrated by the reduced onset potential and increased current density. The F,N,S-rGO exhibits an even higher catalytic activity with the most positive onset potential of 0.85 V (vs. RHE) and the highest limiting current density of ~3.5 mA/cm$^2$ among the four carbon based materials.

Incorporation into AEMFCs

*In situ* ORR performance of F,N,S-rGO in an AEMFC was evaluated. The F,N,S-rGO based cathodes were fabricated by spray-coating the catalyst ink on top of a 5 cm$^2$ commercial carbon-fiber GDL (F,N,S-rGO-SG). For the AEMFC, HMT-PMBI was used. Membrane electrode assemblies (MEAs) were constructed by stacking the F,N,S-rGO-SG cathodes with an electrolyte membrane and a Pt-C gas diffusion anode (0.2 mg Pt/cm$^2$ on Sigracet 25BC). The fuel

cell polarizations and power density curves for the AEMFC using F,N,S-rGO as cathode materials were measured. The superior performance in alkaline electrolyte that was observable in RDE measurements is well reflected when F,N,S-rGO is incorporated into full AEMFCs. The AEMFC manifests a peak power density of 46 mW/cm$^2$.

A fuel cell with exclusively S-doped rGO as catalyst but otherwise the same specifications as the acidic F,N,S-rGO sample was also constructed. This fuel cell exhibited a much lower peak power density of 5.8 mW/cm$^2$, showing the synergistic effect of the F, N, and S tri-doping compared to individual S-doping.

The heteroatom-doped graphene-based materials have been shown to be less susceptible to many cathode degradation mechanisms, such as high radical concentrations caused by fuel crossover, and is less susceptible to CO poisoning than Pt catalysts.

Synthesis of S-rGO

Materials: HPLC reagent grade dimethylformaminde (DMF), phosphorus pentasulfide ($P_4S_{10}$) (99%) and 0.2 μm polyamide filter membrane were purchased from Scharlau Chemie S.A, Sigma Aldrich and Whatman INT.Ltd, respectively. GO was synthesized using a modified Hummer's method (see SI). S-rGO was prepared according to our previous report. In brief, 100 mg GO was dispersed in 100 ml DMF and sonicated for 1 h. After removing undispersed GO by centrifugation at 1000 rpm for 10 min, a homogeneous solution of GO in DMF was obtained. Then, 300 mg $P_4S_{10}$ was added to the solution. The reaction flask was evacuated to 5.10$^{-3}$ mbar at 100°C for 2 min to remove humidity in the flask atmosphere and refused with $N_2$, this step was repeated 3 times. The thionation was performed for 24 h in nitrogen atmosphere under continuous stirring at 140°C. Finally, the reaction product was collected by filtering the solution through a 0.2 μm polyamide membrane filter and was extensively washed in succession with 100 ml of water, ethanol and DMF, respectively.

F,N,S-rGO synthesis

2 g of DMF-saturated S-rGO (200 mg S-rGO containing 800 mg DMF) and 1 ml Nafion dispersion (D2021 Nafion dispersion, Dupont) were mixed with 2 ml DMF by stirring for 10 min at room temperature. The dispersion was then performed by an ultrasonication step for 10 min. A homogeneous S-rGO-Nafion-DMF dispersion was obtained as result. Consequently, the dispersion was heated on a hotplate at 100°C for 10 min to evaporate residual solvent. A certain amount of DMF remained in the S-rGO-Nafion composite due to reaction of DMF with Nafion to form DMF-Nafion salt compound. As a result, a S-rGO-Nafion-DMF composite was achieved. Finally, the S-rGO-Nafion-DMF composite was pyrolyzed at 600°C for 2h under nitrogen atmosphere protection using a tubular thermal furnace. As a result, F,N,S-rGO material was achieved.

Fuel cell assembly and characterization

F,N,S-rGO was ground into fine powders, and dispersed in a mixture of solvents consisting of methanol: water: isopropanol (3: 1: 0.1 mass ratio) containing 15 wt% polymer electrolyte, forming the catalyst ink. The F,N,S-rGO based cathodes were fabricated by spray-coated the catalyst ink on top of a 5 cm$^2$ commercial carbon-fiber GDL. Poly(benzimidazolium), HMT-PMBI, was used as membrane and catalyst layer polymer electrolyte. MEAs were assembled by including an anode GDE comprised of 15 wt% HMT-PMBI ionomer on Sigracet 25BC. The polarization and power density data were recorded using a Scribner Associates Inc. 850e test-bench. 300 kPaabs pressurized $H_2$ and $O_2$ at a flow rate of 0.5 L/min were used. Polarization data was recorded with a scan speed of 1 min/point.

## Claims

**1.** A catalyst-coated membrane, comprising:

(a) a film comprising a random copolymer of Formula (I)

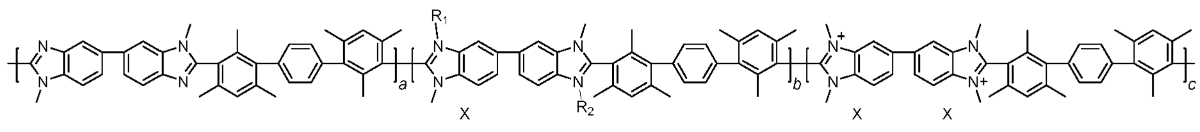

(I)

wherein

X is an anion selected from iodide, bromide, chloride, fluoride, hydroxide, carbonate, bicarbonate, sulfate, tetrakis(3,5-bis(trifluoromethyl)phenyl)borate, bis(trifluoromethane)sulfonamide, and any combination thereof, wherein X counterbalances a positive charge in the polymer;
$R_1$ and $R_2$ are each independently selected from absent and methyl,
provided that $R_1$ and $R_2$ are not both absent, or both methyl;
provided that when one of $R_1$ or $R_2$ is methyl, the other is absent; and
provided that when $R_1$ or $R_2$ is methyl, the nitrogen to which the methyl is connected to is positively charged,
a, b, and c are mole percentages, wherein
a is from 0 mole % to 45 mole %,
b+c is 55 mole % to 100 mole %,
b and c are each more than 0 %, and
a+b+c=100%, and

(b) a catalyst coating on the film, the catalyst coating comprising from 5 % to 35 % by weight of the copolymer of Formula (I) and from 10 % to 95 % by weight of a catalyst selected from carbon-supported Pt, alkaline-stable metal-supported Pt, non-supported Pt, carbon-supported Pt alloy, alkaline-stable metal-supported Pt alloy, non-supported Pt alloy, and any combination thereof; Ag, Ni, alloys thereof, and any combination thereof; a doped graphene; and a doped carbon nanotube.

**2.** The catalyst-coated membrane of Claim 1, wherein the copolymer of Formula (I) comprises from 80 % to 95 % degree of methylation; or
wherein the copolymer of Formula (I) comprises from 85 % to 95 % degree of methylation.

**3.** The catalyst-coated membrane of any one of the preceding Claims, wherein the catalyst coating comprises from 10 % to 30 % by weight of the copolymer of Formula (I).

**4.** The catalyst-coated membrane of any one of the preceding Claims, wherein the alkaline-stable metal-supported Pt is selected from Sn-supported Pt, Ti-supported Pt, Ni-supported Pt, and any combination thereof; and the alkaline-stable metal-supported Pt alloy is selected from Sn-supported Pt alloy, Ti-supported Pt alloy, Ni-supported Pt alloy, and any combination thereof; or
wherein the carbon-supported Pt comprises from 20 % by weight to 50 % by weight of Pt; or
wherein the metal catalyst is selected from supported Pt black and non-supported Pt black; or
wherein the Pt alloy is selected from a Pt-Ru alloy, a Pt-Ir alloy, and a Pt-Pd alloy; or
wherein the graphene is doped with S, N, F, a metal, or a combination thereof; or
wherein the carbon nanotube is doped with S, N, F, a metal, or a combination thereof.

**5.** A fuel cell, comprising a catalyst-coated membrane of any one of the preceding claims, wherein the catalyst-coated membrane has two sides, and one side of the catalyst-coated membrane is a cathode, and the other side of the catalyst-coated membrane is an anode.

**6.** The fuel cell of Claim 5, wherein the catalyst-coated membrane comprises a cathode catalyst loading of 0.1 mg to 5.0 mg of catalyst per $cm^2$ and an anode catalyst loading of 0.1 mg to 5.0 mg of catalyst per $cm^2$; or
wherein the catalyst-coated membrane comprises a cathode catalyst loading of 0.1 mg to 0.5 mg of catalyst per $cm^2$ and an anode catalyst loading of 0.1 mg to 0.5 mg of catalyst per $cm^2$.

**7.** The fuel cell of any one of Claims 5 or 6, wherein the fuel cell is operated in an atmosphere comprising carbon dioxide, oxygen, and water at the cathode; or
wherein the fuel cell is operated in an oxygen and water atmosphere at the cathode; or
wherein the fuel cell is operated in a carbon dioxide-free atmosphere at the cathode.

**8.** The fuel cell of any one of Claims 5 to 7, wherein the fuel cell is operated in a hydrogen atmosphere at the anode; or the fuel cell is operated in an atmosphere comprising methanol, ethanol, hydrazine, formaldehyde, ethylene glycol, or any combination thereof at the anode.

**9.** A method of operating a fuel cell according to any one of Claims 5 to 8, comprising:

(a) conditioning the fuel cell by supplying hydrogen to the anode, and oxygen and water to the cathode, and operating the fuel cell to generate electrical power and water at a potential of 1.1 V to 0.1 V and at a temperature of 20 °C to 90 °C, until the fuel cell reaches at least 90 % of peak performance; and
(b) continuing supplying hydrogen to the anode and oxygen and water to the cathode, and operating the fuel cell at a potential of 1.1 V to 0.1 V and a temperature of 20 °C to 90 °C.

**10.** A method of making a fuel cell, comprising

(a) pre-conditioning a catalyst-coated membrane of any one of Claims 1 to 4 by contacting the catalyst-coated membrane with an aqueous hydroxide solution for at least 1 hour to provide a pre-conditioned catalyst-coated membrane; and
(b) incorporating the pre-conditioned catalyst-coated membrane into a fuel cell.

**11.** A water electrolyzer, comprising a catalyst-coated membrane of any one of Claims 1 to 4, wherein the catalyst-coated membrane has two sides, and one side of the catalyst-coated membrane is a cathode, and the other side of the catalyst-coated membrane is an anode.

**12.** The water electrolyzer of Claim 11, wherein the catalyst-coated membrane comprises a cathode catalyst loading of 0.1 mg to 5.0 mg
catalyst per $cm^2$ and an anode catalyst loading of 0.1 mg to 5.0 mg catalyst per $cm^2$; or wherein
the catalyst-coated membrane comprises a cathode catalyst loading of 1.0 mg to 5.0 mg catalyst per $cm^2$ and an anode catalyst loading of 1.0 mg to 5.0 mg per $cm^2$.

**13.** A method of operating a water electrolyzer of Claims 11 or 12, comprising:

(a) providing water or an aqueous hydroxide electrolyte solution at 20 °C to 80 °C to the anode, the cathode, or both the anode and the cathode of the water electrolyzer; and
(b) operating the water electrolyzer to generate hydrogen, oxygen, and water.

**Patentansprüche**

**1.** Katalysatorbeschichtete Membran, die Folgendes umfasst:

(a) einen Film, der ein beliebiges Copolymer der Formel (I) umfasst

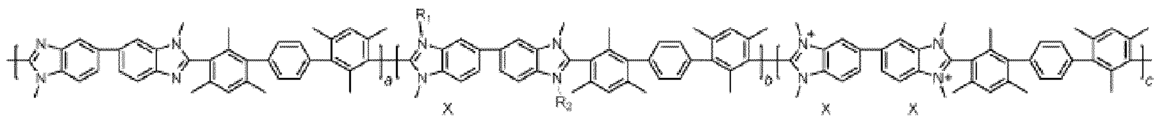

(I)

wobei

X ein Amon ist, ausgewählt aus Iodid, Bromid, Chlorid, Fluorid, Hydroxid, Carbonat, Bicarbonat, Sulfat, Tetrakis(3,5-bis(trifluormethyl)phenyl)borat, Bis(trifluormethan)sulfonamid und einer beliebigen Kombination davon, wobei X eine positive Ladung in dem Polymer ausgleicht;
$R_1$ und $R_2$ jeweils unabhängig voneinander aus Abwesenheit und Methyl ausgewählt werden,

vorausgesetzt, dass $R_1$ und $R_2$ nicht beide fehlen oder beide Methyl sind;
vorausgesetzt, dass wenn eines von $R_1$ oder $R_2$ Methyl ist, das andere fehlt; und
vorausgesetzt, dass wenn $R_1$ oder $R_2$ Methyl ist, der Stickstoff, an den das Methyl gebunden ist, positiv geladen ist,

a, b und c Molprozentsätze sind, wobei

a von 0 Mol-% bis 45 Mol-% beträgt,

b + c 55 Mol-% bis 100 Mol-% beträgt,
b und c jeweils mehr als 0% betragen und
a + b + c = 100% und

(b) eine Katalysatorbeschichtung auf dem Film, wobei die Katalysatorbeschichtung 5 bis 35 Gew.-% des Copolymers der Formel (I) und 10 bis 95 Gew.-% eines Katalysators umfasst, ausgewählt aus kohlenstoffgetragertem Pt, alkalisch stabilem metallgeträgertem Pt, nicht-geträgertem Pt, kohlenstoffgeträgerter Pt-Legierung, alkalisch stabiler metallgeträgerter Pt-Legierung, nicht-geträgerter Pt-Legierung und jeder Kombination davon; Ag, Ni, Legierungen davon und jede Kombination davon; einem dotierten Graphen und einer dotierten Kohlenstoffnanoröhre.

**2.** Katalysatorbeschichtete Membran nach Anspruch 1, wobei das Copolymer der Formel (I) einen Methylierungsgrad von 80% bis 95% umfasst; oder
wobei das Copolymer der Formel (I) einen Methylierungsgrad von 85% bis 95% umfasst.

**3.** Katalysatorbeschichtete Membran nach einem der vorhergehenden Ansprüche, wobei die Katalysatorbeschichtung 10 bis 30 Gew.-% des Copolymers der Formel (I) umfasst.

**4.** Katalysatorbeschichtete Membran nach einem der vorhergehenden Ansprüche, wobei das alkalisch stabile metallgeträgerte Pt ausgewählt ist aus Sn-geträgertem Pt, Tigeträgertem Pt, Ni-geträgertem Pt und einer beliebigen Kombination davon; und die alkalisch stabile metallgeträgerte Pt-Legierung ausgewählt ist aus einer Sn-geträgerten Pt-Legierung, einer Ti-geträgerten Pt-Legierung, einer Ni-geträgerten Pt-Legierung und einer beliebigen Kombination davon; oder
wobei das kohlenstoffgeträgerte Pt 20 Gew.-% bis 50 Gew.-% Pt umfasst; oder
wobei der Metallkatalysator ausgewählt ist aus geträgertem Pt-Schwarz und nicht-geträgertem Pt-Schwarz; oder
wobei die Pt-Legierung ausgewählt ist aus einer Pt-Ru-Legierung, einer Pt-Ir-Legierung und einer Pt-Pd-Legierung; oder
wobei das Graphen mit S, N, F, einem Metall oder einer Kombination davon dotiert ist; oder
wobei die Kohlenstoffnanoröhre mit S, N, F, einem Metall oder einer Kombination davon dotiert ist.

**5.** Brennstoffzelle, die eine katalysatorbeschichtete Membran nach einem der vorhergehenden Ansprüche umfasst, wobei die katalysatorbeschichtete Membran zwei Seiten aufweist, und eine Seite der katalysatorbeschichteten Membran eine Kathode ist und die andere Seite der katalysatorbeschichteten Membran eine Anode ist.

**6.** Brennstoffzelle nach Anspruch 5, wobei die katalysatorbeschichtete Membran eine Kathodenkatalysatorbeladung von 0,1 mg bis 5,0 mg Katalysator pro $cm^2$ und eine Anodenkatalysatorbeladung von 0,1 mg bis 5,0 mg Katalysator pro $cm^2$ umfasst; oder
wobei die katalysatorbeschichtete Membran eine Kathodenkatalysatorbeladung von 0,1 mg bis 0,5 mg Katalysator pro $cm^2$ und eine Anodenkatalysatorbeladung von 0,1 mg bis 0,5 mg Katalysator pro $cm^2$ umfasst.

**7.** Brennstoffzelle nach einem der Ansprüche 5 oder 6, wobei die Brennstoffzelle in einer Atmosphäre betrieben wird, die Kohlendioxid, Sauerstoff und Wasser an der Kathode umfasst; oder
wobei die Brennstoffzelle in einer Sauerstoff- und Wasseratmosphäre an der Kathode betrieben wird; oder
wobei die Brennstoffzelle in einer kohlendioxidfreien Atmosphäre an der Kathode betrieben wird.

**8.** Brennstoffzelle nach einem der Ansprüche 5 bis 7, wobei die Brennstoffzelle in einer Wasserstoffatmosphäre an der Anode betrieben wird; oder
die Brennstoffzelle in einer Atmosphäre betrieben wird, die Methanol, Ethanol, Hydrazin, Formaldehyd, Ethylenglykol oder eine beliebige Kombination davon an der Anode umfasst.

**9.** Verfahren zum Betreiben einer Brennstoffzelle nach einem der Ansprüche 5 bis 8, das Folgendes umfasst:

(a) Konditionieren der Brennstoffzelle durch Zuführen von Wasserstoff zur Anode und Sauerstoff und Wasser zur Kathode, und Betreiben der Brennstoffzelle zur Erzeugung von elektrischem Strom und Wasser bei einem Potential von 1,1 V bis 0,1 V und bei einer Temperatur von 20° C bis 90° C, bis die Brennstoffzelle mindestens 90% der Spitzenleistung erreicht; und
(b) weiteres Zuführen von Wasserstoff zur Anode und Sauerstoff und Wasser zur Kathode, und Betreiben der Brennstoffzelle bei einem Potential von 1,1 V bis 0,1 V und einer Temperatur von 20° C bis 90° C.

**10.** Verfahren zur Herstellung einer Brennstoffzelle, das Folgendes umfasst:

(a) Vorkonditionieren einer katalysatorbeschichteten Membran nach einem der Ansprüche 1 bis 4 durch Inkontaktbringen der katalysatorbeschichteten Membran mit einer wässrigen Hydroxidlösung für mindestens 1 Stunde, um eine vorkonditionierte katalysatorbeschichtete Membran bereitzustellen; und
(b) Einbringen der vorkonditionierten katalysatorbeschichteten Membran in eine Brennstoffzelle.

**11.** Wasserelektrolyseur, der eine katalysatorbeschichtete Membran nach einem der Ansprüche 1 bis 4 umfasst, wobei die katalysatorbeschichtete Membran zwei Seiten aufweist und eine Seite der katalysatorbeschichteten Membran eine Kathode ist und die andere Seite der katalysatorbeschichteten Membran eine Anode ist.

**12.** Wasserelektrolyseur nach Anspruch 11, wobei die katalysatorbeschichtete Membran eine Kathodenkatalysatorbeladung von 0,1 mg bis 5,0 mg Katalysator pro $cm^2$ und eine Anodenkatalysatorbeladung von 0,1 mg bis 5,0 mg Katalysator pro $cm^2$ umfasst; oder wobei
die katalysatorbeschichtete Membran eine Kathodenkatalysatorbeladung von 1,0 mg bis 5,0 mg Katalysator pro $cm^2$ und eine Anodenkatalysatorbeladung von 1,0 mg bis 5,0 mg pro $cm^2$ umfasst.

**13.** Verfahren zum Betreiben eines Wasserelektrolyseurs nach Anspruch 11 oder 12, das Folgendes umfasst:

(a) Bereitstellen von Wasser oder einer wässrigen Hydroxidelektrolytlösung bei 20° C bis 80° C zur Anode, zur Kathode oder sowohl zur Anode als auch zur Kathode des Wasserelektrolyseurs; und
(b) Betreiben des Wasserelektrolyseurs zur Erzeugung von Wasserstoff, Sauerstoff und Wasser.

## Revendications

**1.** Membrane revêtue de catalyseur, comprenant :

(a) un film comprenant un copolymère aléatoire de formule (I)

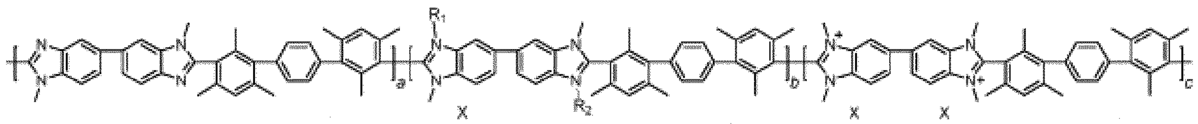

(I)

dans laquelle

X est un anion choisi parmi l'iodure, le bromure, le chlorure, le fluorure, l'hydroxyde, le carbonate, le bicarbonate, le sulfate, le tétrakis[3,5-bis(trifluorométhyl)phényl]borate, le bis(trifluorométhane)sulfonamide, et toute combinaison de ceux-ci, dans laquelle X contrebalance une charge positive dans le polymère ;
$R_1$ et $R_2$ sont chacun indépendamment choisis parmi absent et méthyle,

à condition que $R_1$ et $R_2$ ne soient pas tous deux absents, ou tous deux méthyle ;
à condition que lorsque l'un parmi $R_1$ ou $R_2$ est un méthyle, l'autre est absent ; et
à condition que lorsque $R_1$ ou $R_2$ est un méthyle, l'azote auquel le méthyle est relié est chargé positivement,

a, b et c sont des pourcentages en mole, dans laquelle

a est de 0% en mole à 45% en mole,
b + c est de 55 % en mole à 100% molaire,
b et c sont chacun supérieurs à 0%, et
a + b + c = 100%, et

(b) un revêtement de catalyseur sur le film, le revêtement de catalyseur comprenant de 5% à 35% en poids du

copolymère de formule (I) et de 10% à 95% en poids d'un catalyseur choisi parmi le Pt supporté sur du carbone, le Pt supporté sur du métal alcalin stable, le Pt non supporté, l'alliage de Pt supporté sur du carbone, l'alliage de Pt supporté sur du métal alcalin stable, l'alliage de Pt non supporté, et toute combinaison de ceux-ci ; Ag, Ni, leurs alliages et toute combinaison de ceux-ci ; un graphène dopé; et un nanotube de carbone dopé.

**2.** Membrane revêtue de catalyseur selon la revendication 1, dans laquelle le copolymère de formule (I) comprend de 80% à 95% de degré de méthylation ; ou
dans laquelle le copolymère de formule (I) comprend de 85% à 95% de degré de méthylation.

**3.** Membrane revêtue de catalyseur selon l'une quelconque des revendications précédentes, dans laquelle le revêtement de catalyseur comprend de 10% à 30% en poids du copolymère de formule (I).

**4.** Membrane revêtue de catalyseur selon l'une quelconque des revendications précédentes, dans laquelle le Pt supporté sur du métal alcalin stable est choisi parmi le Pt supporté sur du Sn, le Pt supporté sur du Ti, le Pt supporté sur du Ni, et toute combinaison de ceux-ci ; et l'alliage de Pt supporté sur du métal alcalin stable est choisi parmi l'alliage de Pt supporté sur du Sn, l'alliage de Pt supporté sur du Ti, l'alliage de Pt supporté sur du Ni, et toute combinaison de ceux-ci ; ou
dans laquelle le Pt supporté sur du carbone comprend de 20% en poids à 50% en poids de Pt; ou
dans laquelle le catalyseur métallique est choisi parmi le noir de Pt supporté et le noir de Pt non supporté ; ou
dans laquelle l'alliage de Pt est choisi parmi un alliage de Pt-Ru, un alliage de Pt-Ir et un alliage de Pt-Pd ; ou
dans laquelle le graphène est dopé avec S, N, F, un métal ou une combinaison de ceux-ci ; ou
dans laquelle le nanotube de carbone est dopé avec S, N, F, un métal ou une combinaison de ceux-ci.

**5.** Pile à combustible, comprenant une membrane revêtue de catalyseur selon l'une quelconque des revendications précédentes, dans laquelle la membrane revêtue de catalyseur a deux côtés, et un côté de la membrane revêtue de catalyseur est une cathode, et l'autre côté de la membrane revêtue de catalyseur est une anode.

**6.** Pile à combustible selon la revendication 5, dans laquelle la membrane revêtue de catalyseur comprend une charge de catalyseur de cathode de 0,1 mg à 5,0 mg de catalyseur par $cm^2$ et une charge de catalyseur d'anode de 0,1 mg à 5,0 mg de catalyseur par $cm^2$ ; ou
dans laquelle la membrane revêtue de catalyseur comprend une charge de catalyseur de cathode de 0,1 mg à 0,5 mg de catalyseur par $cm^2$ et une charge de catalyseur d'anode de 0,1 mg à 0,5 mg de catalyseur par $cm^2$.

**7.** Pile à combustible selon l'une quelconque des revendications 5 ou 6, dans laquelle la pile à combustible fonctionne dans une atmosphère comprenant du dioxyde de carbone, de l'oxygène et de l'eau au niveau de la cathode ; ou
dans laquelle la pile à combustible fonctionne dans une atmosphère d'oxygène et d'eau au niveau de la cathode ; ou
dans laquelle la pile à combustible fonctionne dans une atmosphère sans dioxyde de carbone au niveau de la cathode.

**8.** Pile à combustible selon l'une quelconque des revendications 5 à 7, dans laquelle la pile à combustible fonctionne dans une atmosphère d'hydrogène au niveau de l'anode ; ou
la pile à combustible fonctionne dans une atmosphère comprenant du méthanol, de l'éthanol, de l'hydrazine, du formaldéhyde, de l'éthylène glycol ou toute combinaison de ceux-ci au niveau de l'anode.

**9.** Procédé de fonctionnement d'une pile à combustible selon l'une quelconque des revendications 5 à 8, comprenant :

(a) le conditionnement de la pile à combustible en fournissant de l'hydrogène à l'anode et de l'oxygène et de l'eau à la cathode, et le fonctionnement de la pile à combustible pour générer de l'énergie électrique et de l'eau à un potentiel de 1,1 V à 0,1 V et à une température de 20°C à 90 °C, jusqu'à ce que la pile à combustible atteigne au moins 90% de ses performances de pointe ; et
(b) la continuation de la fourniture de l'hydrogène à l'anode et de l'oxygène et de l'eau à la cathode, et le fonctionnement de la pile à combustible à un potentiel de 1,1 V à 0,1 V et à une température de 20°C à 90°C.

**10.** Procédé de fabrication d'une pile à combustible, comprenant

(a) le pré-conditionnement d'une membrane revêtue de catalyseur selon l'une quelconque des revendications 1 à 4 en mettant en contact la membrane revêtue de catalyseur avec une solution aqueuse d'hydroxyde pendant au moins 1 heure pour fournir un membrane revêtue de catalyseur pré-conditionnée ; et
(b) l'incorporation de la membrane revêtue de catalyseur pré-conditionnée dans une pile à combustible.

**11.** Electrolyseur d'eau, comprenant une membrane revêtue de catalyseur selon l'une quelconque des revendications 1 à 4, dans lequel la membrane revêtue de catalyseur a deux côtés, et un côté de la membrane revêtue de catalyseur est une cathode, et l'autre côté de la membrane revêtue de catalyseur est une anode.

**12.** Electrolyseur d'eau selon la revendication 11, dans lequel la membrane revêtue de catalyseur comprend une charge de catalyseur de cathode de 0,1 mg à 5,0 mg de catalyseur par $cm^2$ et une charge de catalyseur d'anode de 0,1 mg à 5,0 mg de catalyseur par $cm^2$ ; ou dans lequel
la membrane revêtue de catalyseur comprend une charge de catalyseur de cathode de 1,0 mg à 5,0 mg de catalyseur par $cm^2$ et une charge de catalyseur d'anode de 1,0 mg à 5,0 mg par $cm^2$.

**13.** Procédé de fonctionnement d'un électrolyseur d'eau selon les revendications 11 ou 12, comprenant :

(a) la fourniture d'eau ou d'une solution aqueuse d'électrolyte d'hydroxyde à 20°C à 80 °C à l'anode, la cathode ou à la fois à l'anode et à la cathode de l'électrolyseur d'eau ; et
(b) le fonctionnement de l'électrolyseur d'eau pour générer de l'hydrogène, de l'oxygène et de l'eau.

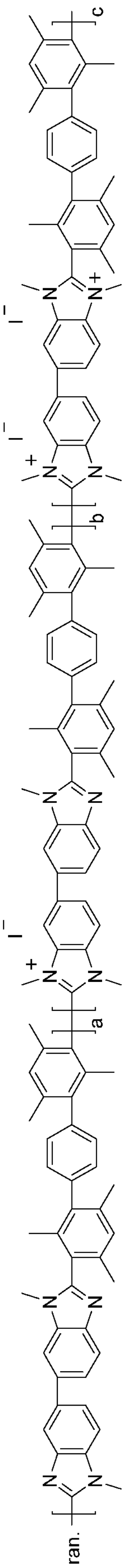

FIG. 1

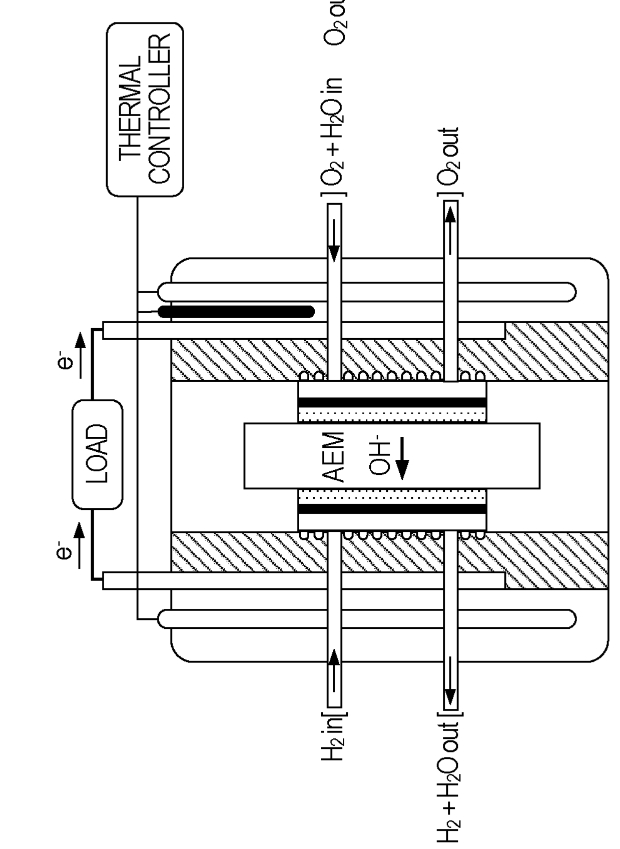


FIG. 2

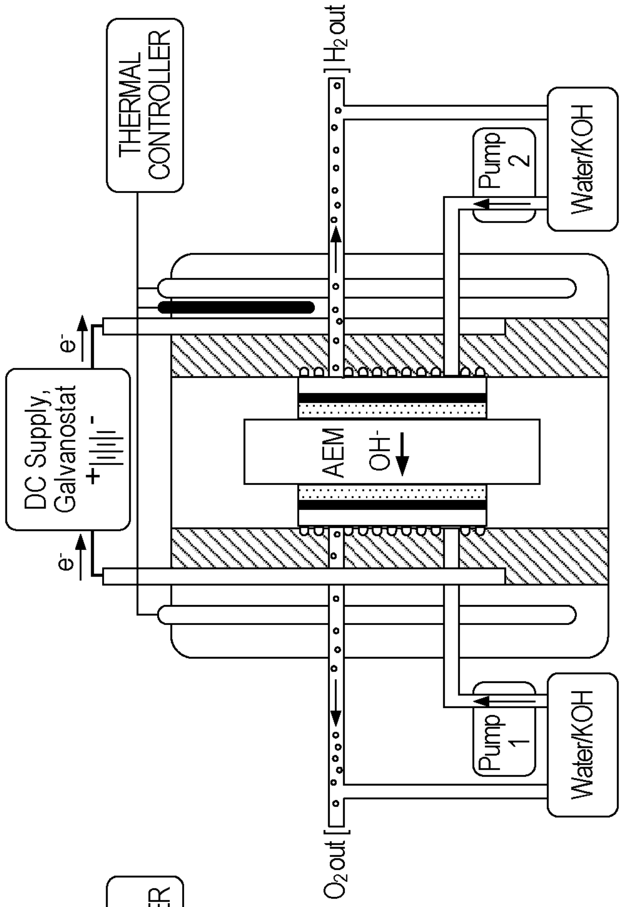


FIG. 3

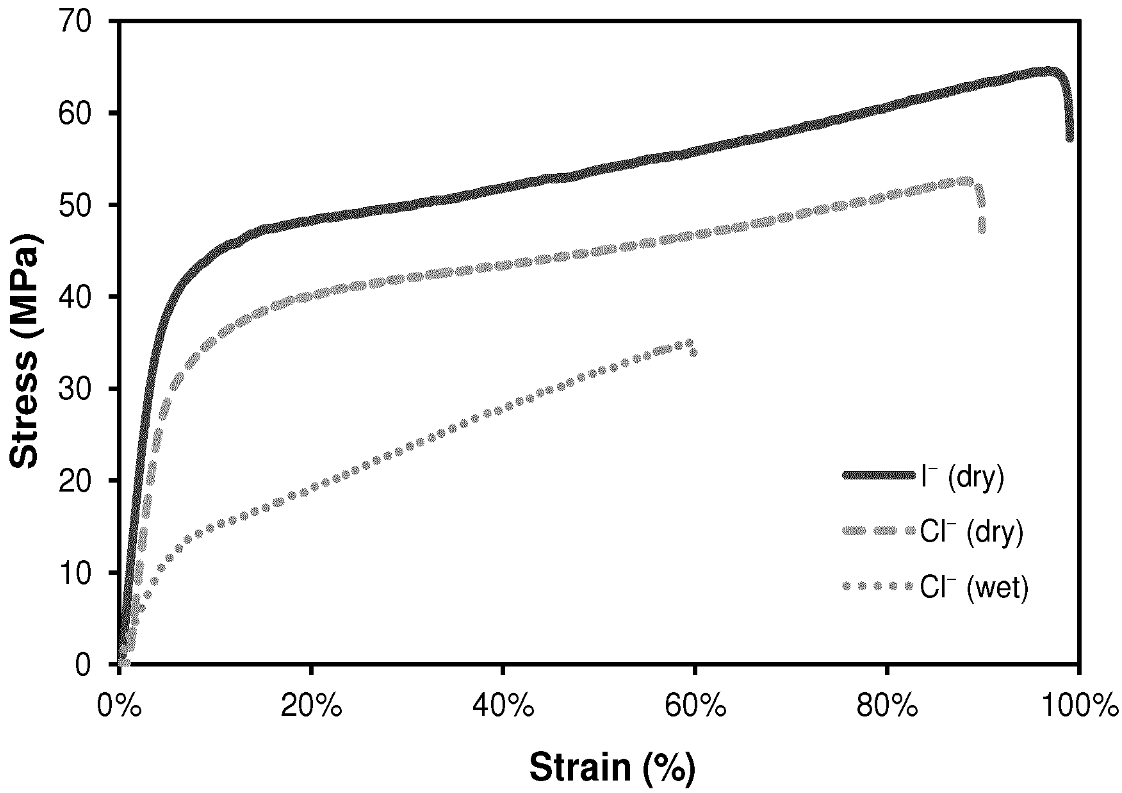
70
60
50
40
30
20
10
0
Stress (MPa)
0%
20%
40%
60%
80%
100%
Strain (%)
I⁻ (dry)
Cl⁻ (dry)
Cl⁻ (wet)

*FIG. 4*

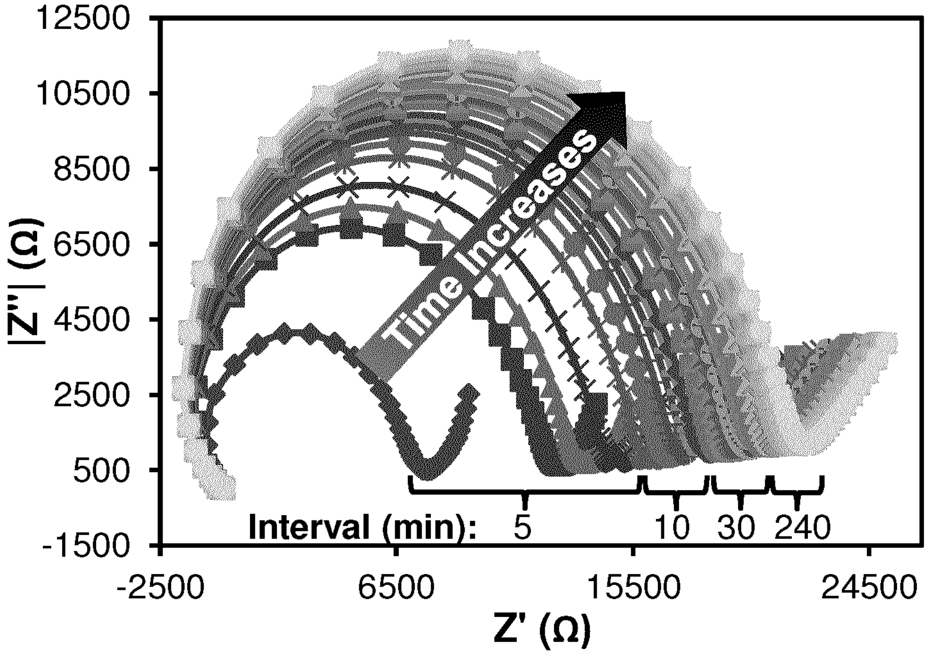
12500
10500
8500
6500
4500
2500
500
-1500
|Z''| (Ω)
Time Increases
Interval (min): 5 10 30 240
-2500
6500
15500
24500
Z' (Ω)

*FIG. 5A*

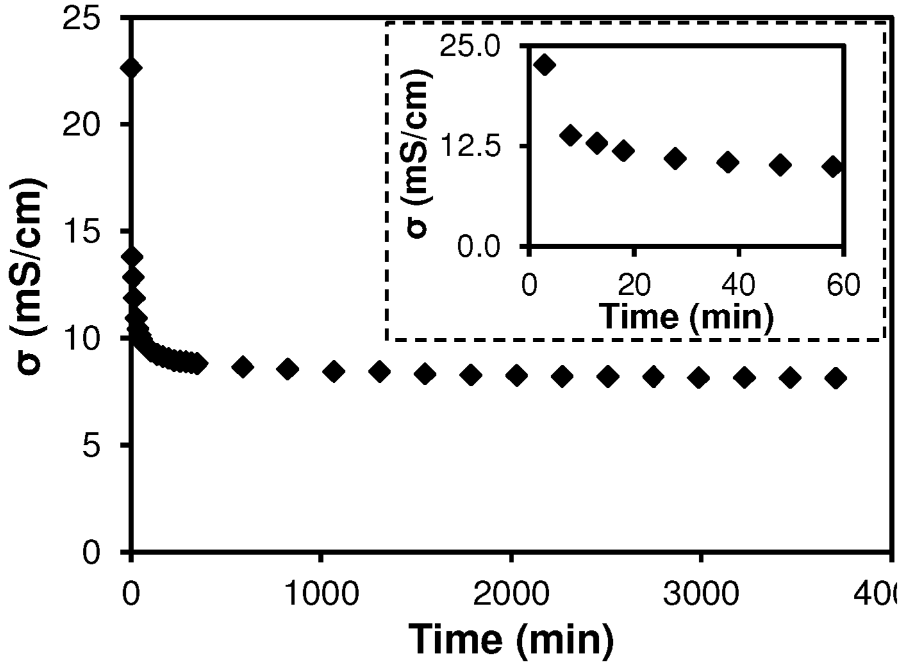
25
20
15
10
5
0
σ (mS/cm)
0
1000
2000
3000
Time (min)
25.0
12.5
0.0
σ (mS/cm)
0
20
40
60
Time (min)

*FIG. 5B*

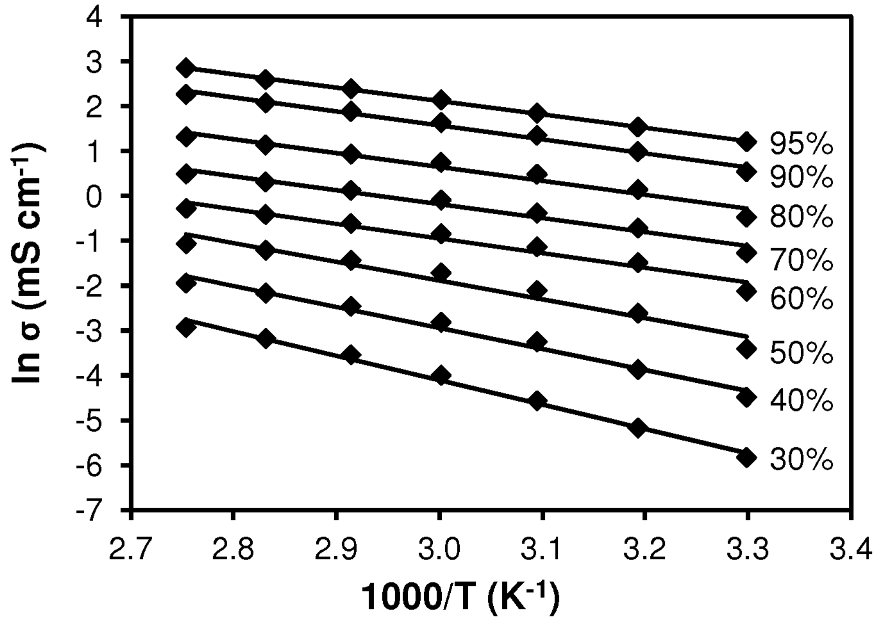
ln σ (mS cm$^{-1}$)
1000/T (K$^{-1}$)
4
3
2
1
0
-1
-2
-3
-4
-5
-6
-7
2.7
2.8
2.9
3.0
3.1
3.2
3.3
3.4
95%
90%
80%
70%
60%
50%
40%
30%

FIG. 6A

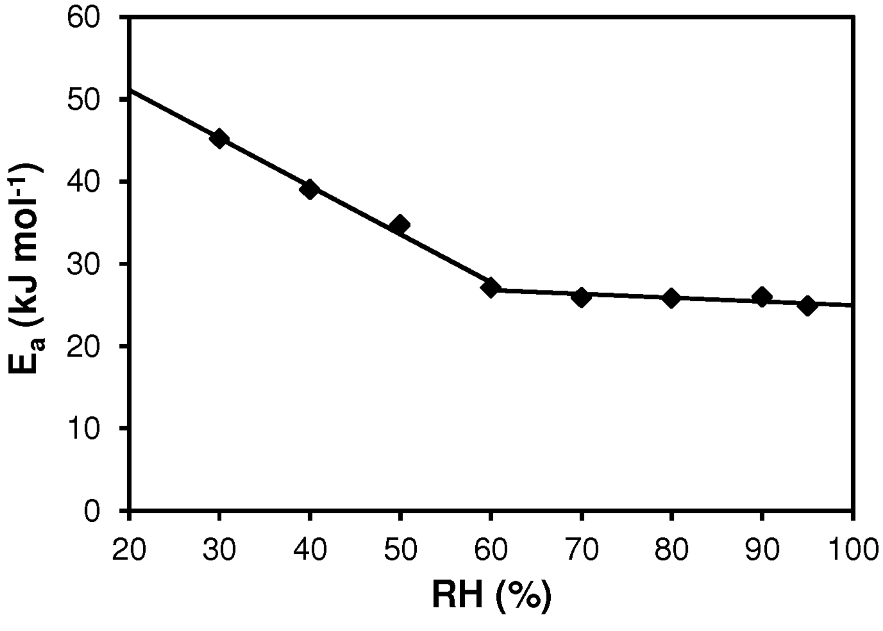
$E_a$ (kJ mol$^{-1}$)
RH (%)
60
50
40
30
20
10
0
20
30
40
50
60
70
80
90
100

FIG. 6B

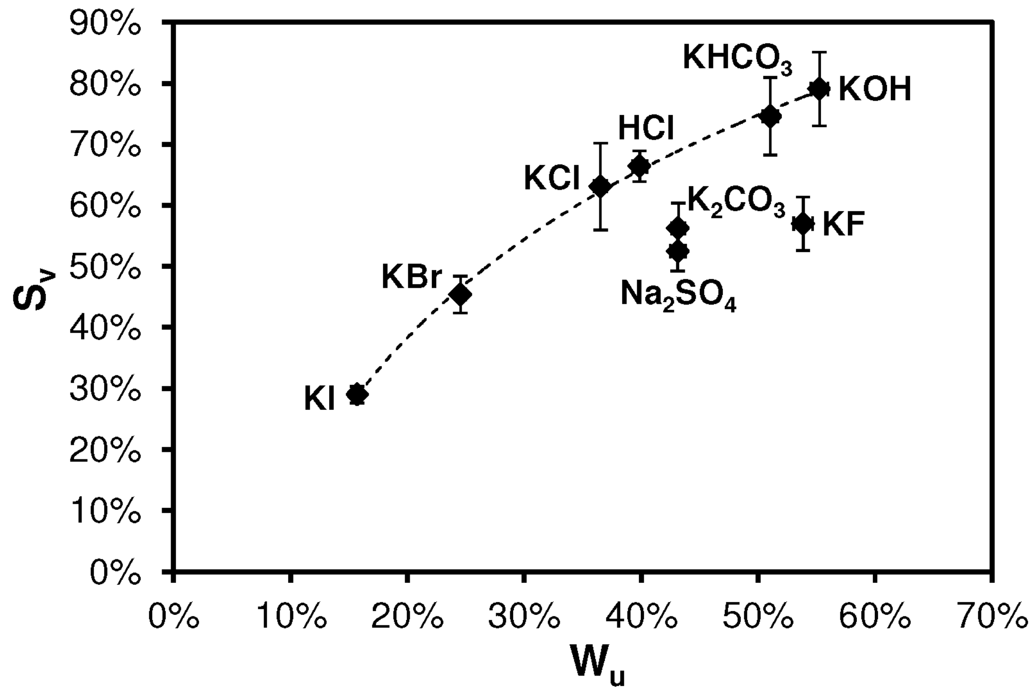
90%
80%
70%
60%
50%
40%
30%
20%
10%
0%
$S_v$
KHCO$_3$
KOH
HCl
KCl
K$_2$CO$_3$
KF
KBr
Na$_2$SO$_4$
KI
0%
10%
20%
30%
40%
50%
60%
70%
$W_u$

*FIG. 7A*

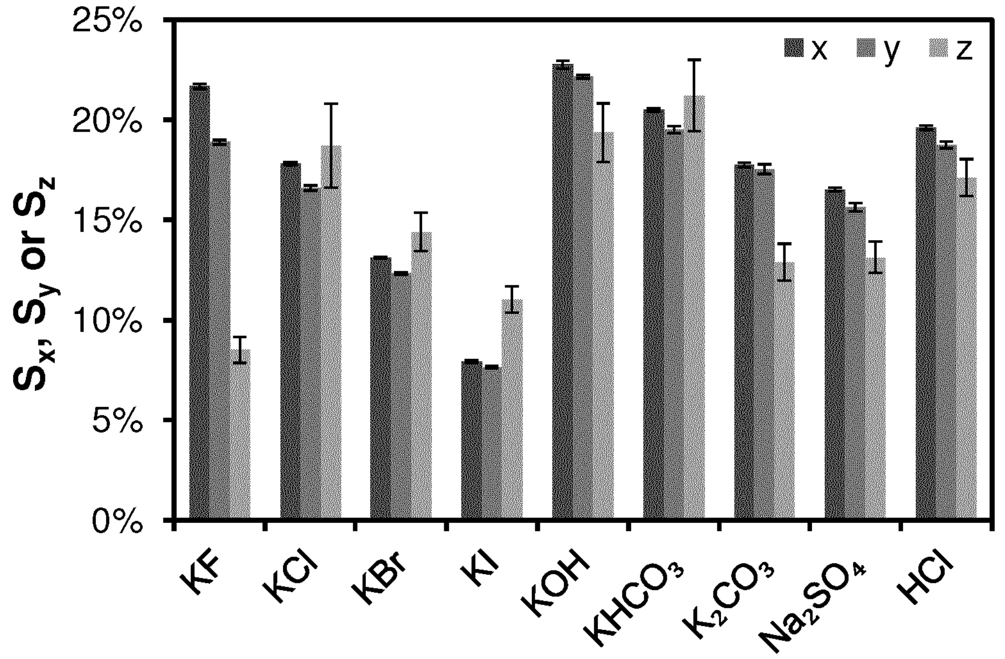
25%
20%
15%
10%
5%
0%
$S_x$, $S_y$ or $S_z$
x
y
z
KF
KCl
KBr
KI
KOH
KHCO$_3$
K$_2$CO$_3$
Na$_2$SO$_4$
HCl

*FIG. 7B*

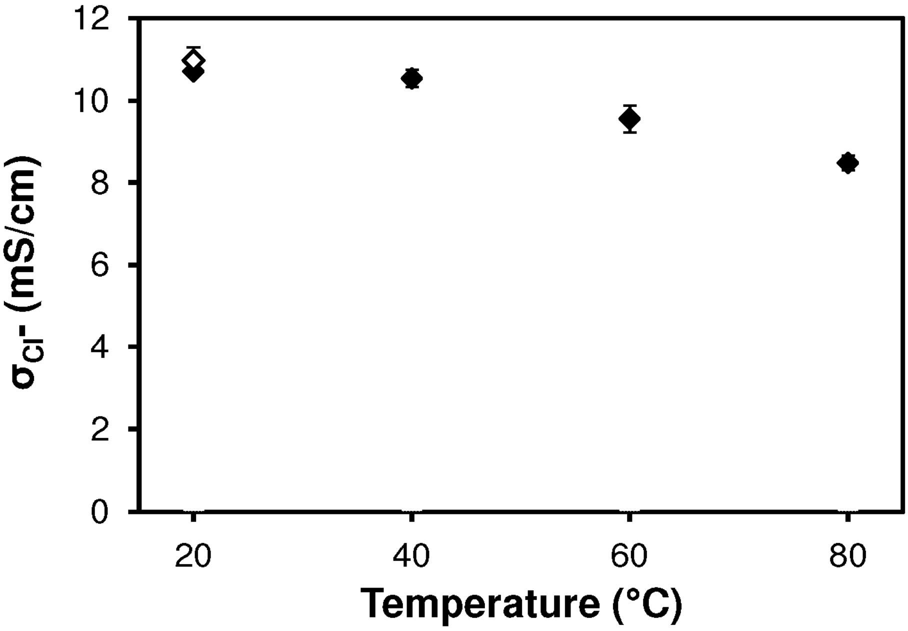
12
10
8
6
4
2
0
σCl- (mS/cm)
20
40
60
80
Temperature (°C)

FIG. 8A

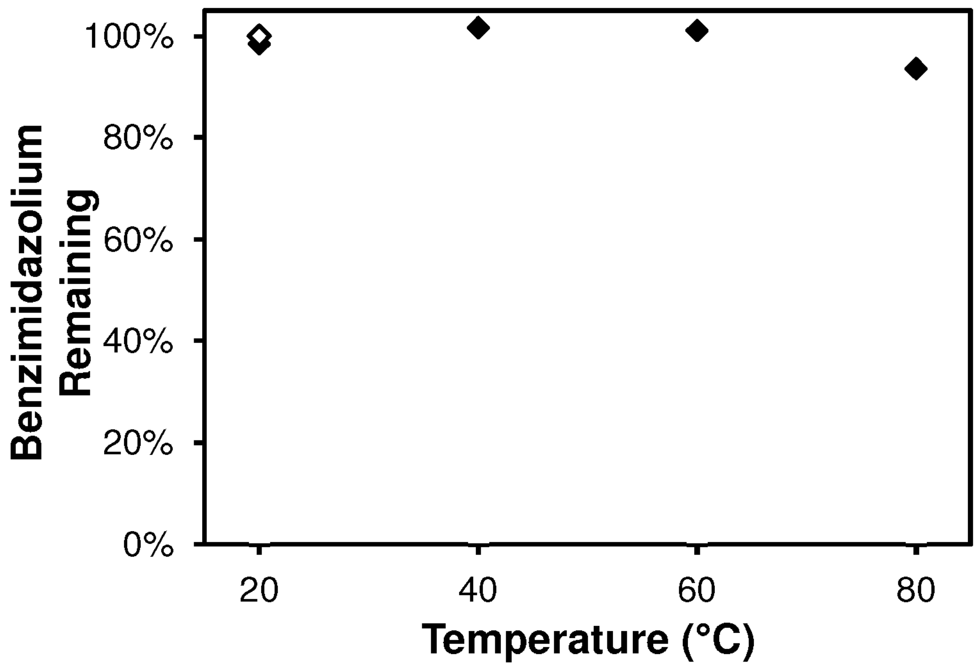
100%
80%
60%
40%
20%
0%
Benzimidazolium Remaining
20
40
60
80
Temperature (°C)

FIG. 8B

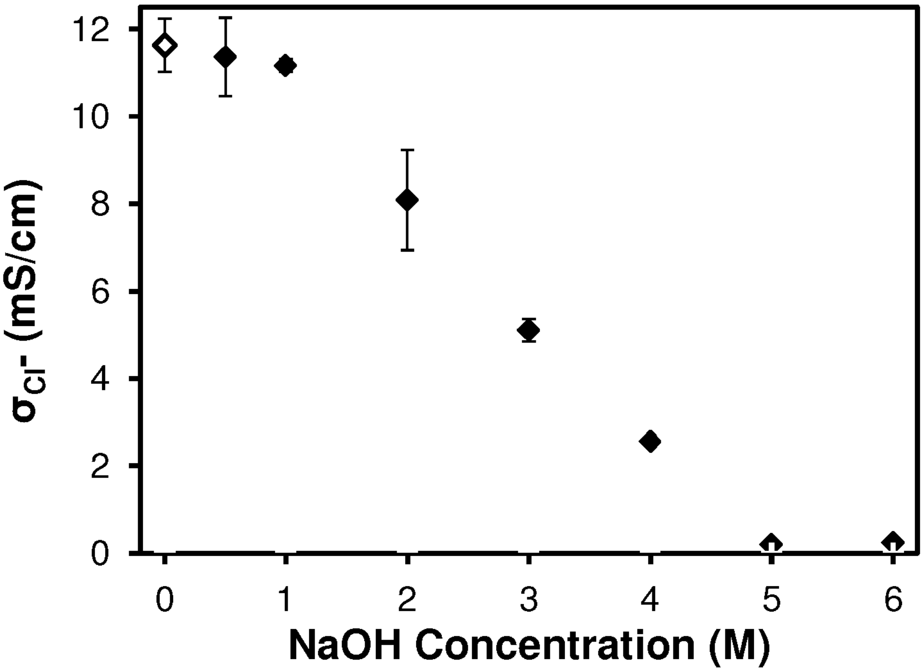
12
10
8
6
4
2
0
σCl- (mS/cm)
0
1
2
3
4
5
6
NaOH Concentration (M)

*FIG. 8C*

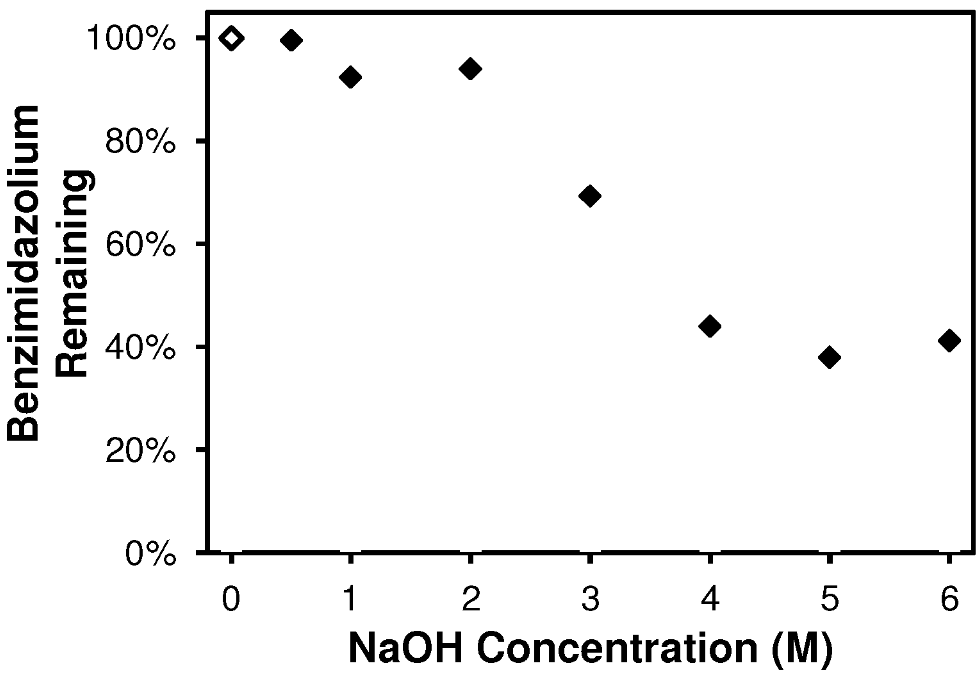
100%
80%
60%
40%
20%
0%
Benzimidazolium Remaining
0
1
2
3
4
5
6
NaOH Concentration (M)

*FIG. 8D*

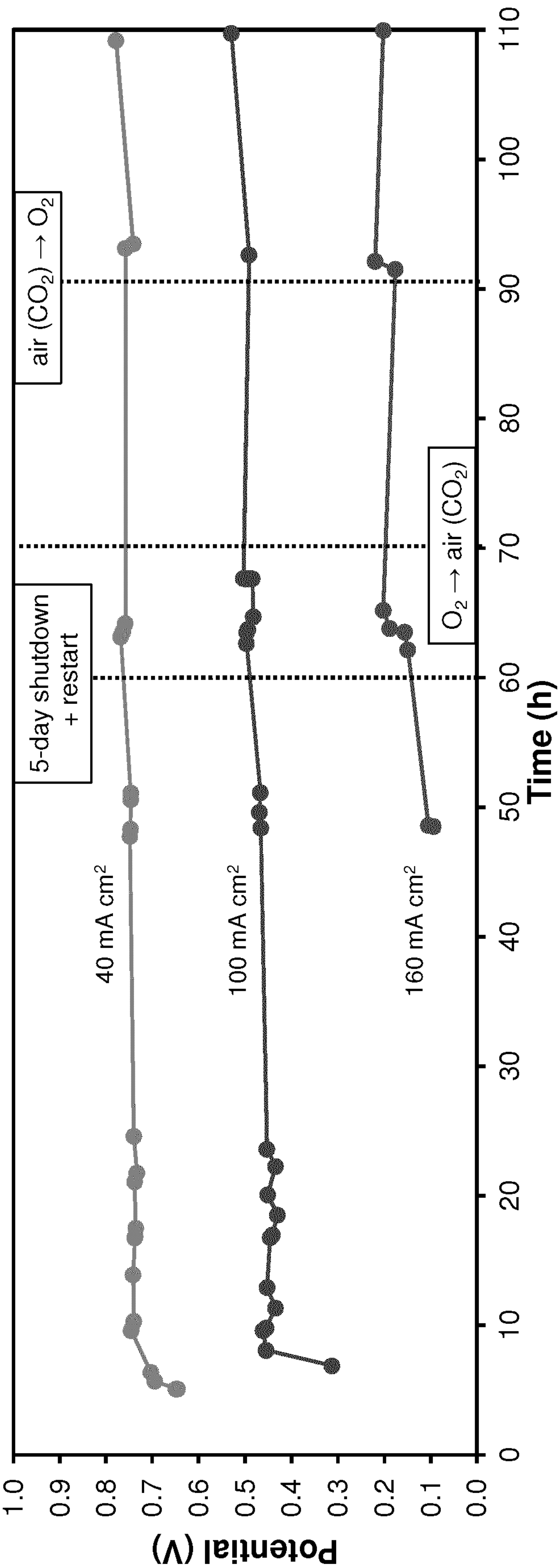
Potential (V)
Time (h)
1.0
0.9
0.8
0.7
0.6
0.5
0.4
0.3
0.2
0.1
0.0
0
10
20
30
40
50
60
70
80
90
100
110
40 mA cm2
100 mA cm2
160 mA cm2
5-day shutdown
+ restart
$O_2$ → air ($CO_2$)
air ($CO_2$) → $O_2$

*FIG. 9*

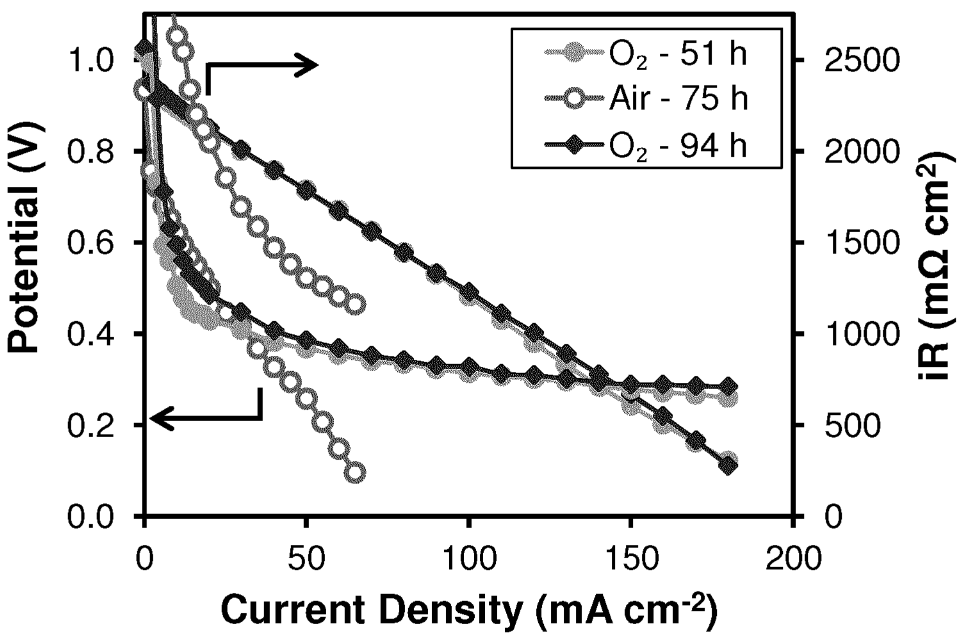


*FIG. 10A*

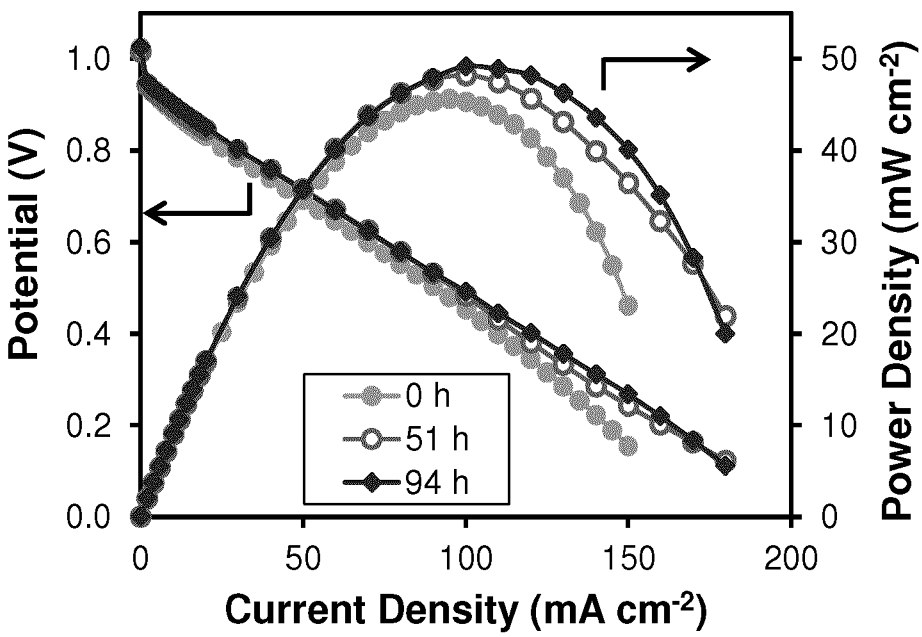


*FIG. 10B*

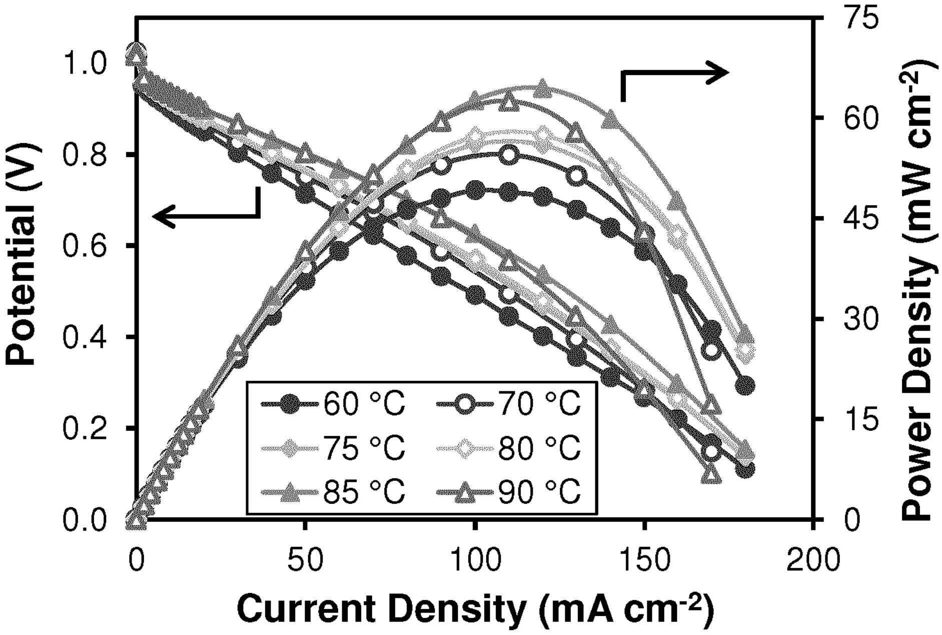
Potential (V)
1.0
0.8
0.6
0.4
0.2
0.0
Power Density (mW cm-2)
75
60
45
30
15
0
0
50
100
150
200
Current Density (mA cm-2)
60 °C
70 °C
75 °C
80 °C
85 °C
90 °C

*FIG. 10C*

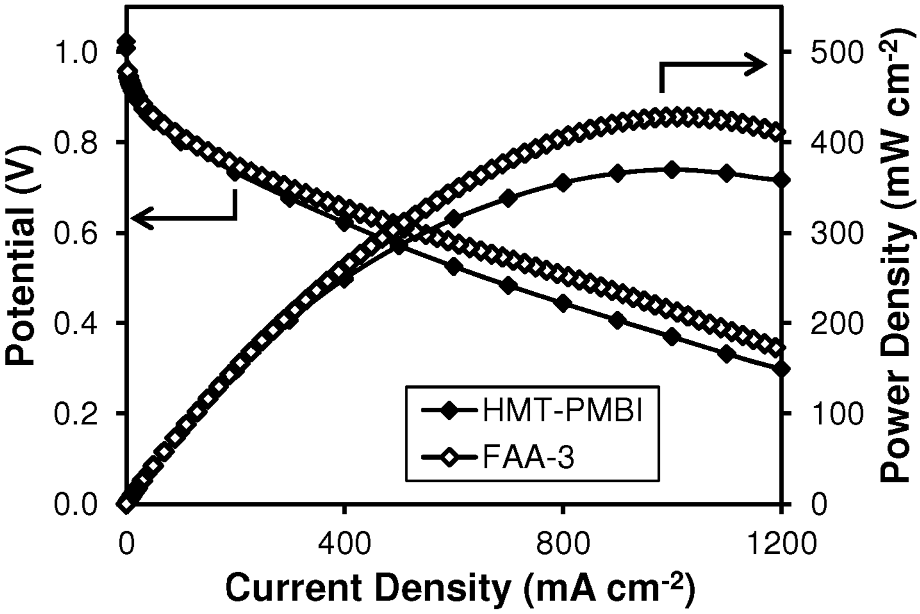

1.0
0.8
0.6
0.4
0.2
0.0
Potential (V)
500
400
300
200
100
0
Power Density (mW cm-2)
0
400
800
1200
Current Density (mA cm-2)
HMT-PMBI
FAA-3


*FIG. 11*

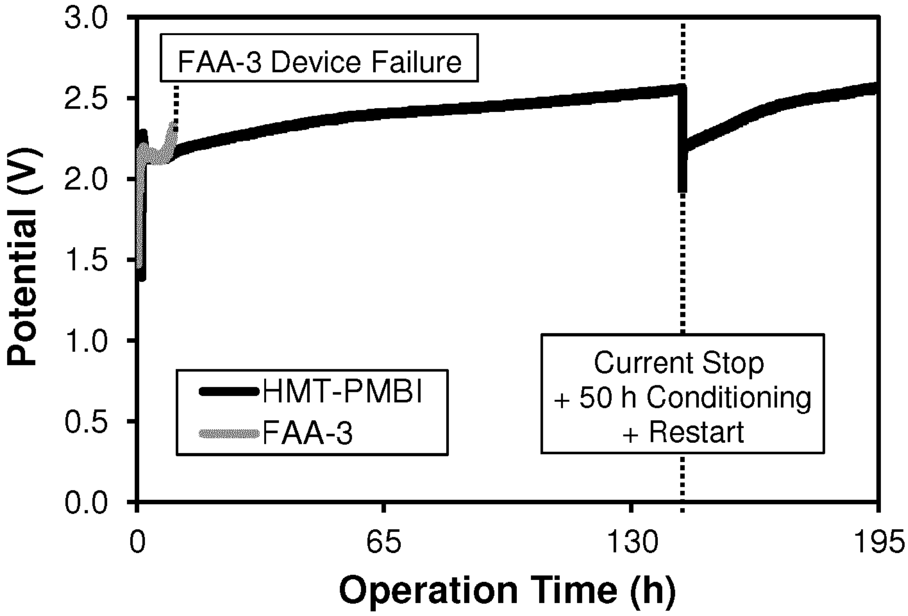

3.0
2.5
2.0
1.5
1.0
0.5
0.0
Potential (V)
FAA-3 Device Failure
HMT-PMBI
FAA-3
Current Stop
+ 50 h Conditioning
+ Restart
0
65
130
195
Operation Time (h)


*FIG. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015157848 A
- WO 2014012188 A
- US 2006110632 A
- CA 2015000248 W


### Non-patent literature cited in the description


- Hydrogen/oxygen polymer electrolyte membrane fuel cells (PEMFCs) based on alkaline-doped polybenzimidazole (PBI). **XING et al.** Electrochemistry Communications. Elsevier, 01 October 2000, vol. 2, 697-702
- **A. G. WRIGHT ; S. HOLDCROFT.** *ACS Macro Lett.,* 2014, vol. 3, 444-447